# EUROPEAN PATENT SPECIFICATION

(11) **EP 2 812 404 B1**
(45) Date of publication and mention of the grant of the patent: **06.11.2019**
(21) Application number: 13746877.3
(22) Date of filing: 06.02.2013
(51) Int. Cl.: C09D 171/00, C23C 2/00, C08L 71/00, C08G 59/06, A47J 47/02, B65D 25/14, C08G 59/14, C08G 59/24

(54) **CONTAINERS AND OTHER ARTICLES COATED WITH COMPOSITIONS**
BEHÄLTER UND ANDERE ARTIKEL, DIE MIT ZUSAMMENSETZUNGEN BESCHICHTET SIND
RÉCIPIENTS ET AUTRES ARTICLES REVÊTUS DE COMPOSITIONS

(30) Priority: 07.02.2012 WO PCT/US2012/024191; 07.02.2012 WO PCT/US2012/024193; 09.08.2012 US 201261681394 P
(43) Date of publication of application: 17.12.2014
(73) Proprietor: SWIMC LLC, Cleveland, Ohio 44115 (US)
(72) Inventor: NIEDERST, Jeffrey, Leechburg, Pennsylvania 15656 (US); EVANS, Richard H., Wexford, Pennsylvania 15090 (US); ROMAGNOLI, Kevin, Pittsburgh, Pennsylvania 15205 (US); O'BRIEN, Robert M., Monongahela, Pennsylvania 15063 (US); VON MAIER, Mark S., Harmony, Pennsylvania 16037 (US); KILLILEA, T. Howard, North Oaks, Minnesota 55127 (US)
(74) Representative: Vossius & Partner Patentanwälte Rechtsanwälte mbB
(86) International application number: PCT/US2013/024960
(87) International publication number: WO 2013/119686

(56) References cited:
- WO-A1-2008/137562
- WO-A2-2007/048094
- WO-A2-2011/130671
- JP-B2- 3 484 546
- KR-B1- 100 804 293
- US-A- 3 984 363
- US-A- 5 494 950
- US-A- 5 591 788
- US-A1- 2010 056 663

## Description

### CROSS-REFERENCE TO RELATED APPLICTIONS

This application claims priority to U.S. Provisional Application Number 61/681,394 filed on August 7, 2012 and International Application Numbers PCT/US2012/024191 and PCT/US2012/024193 filed on February 7, 2012.

### BACKGROUND

The application of coatings to metals to retard or inhibit corrosion is well established. This is particularly true in the area of packaging containers such as metal food and beverage cans. Coatings are typically applied to the interior of such containers to prevent the contents from contacting the metal of the container. Contact between the metal and the packaged product can lead to corrosion of the metal container, which can contaminate the packaged product. This is particularly true when the contents of the container are chemically aggressive in nature. Protective coatings are also applied to the interior of food and beverage containers to prevent corrosion in the headspace of the container between the fill line of the food product and the container lid.

Packaging coatings should preferably be capable of high-speed application to the substrate and provide the necessary properties when hardened to perform in this demanding end use. For example, the coating should be safe for food contact, not adversely affect the taste of the packaged food or beverage product, have excellent adhesion to the substrate, resist staining and other coating defects such as "popping," "blushing" and/or "blistering," and resist degradation over long periods of time, even when exposed to harsh environments. In addition, the coating should generally be capable of maintaining suitable film integrity during container fabrication and be capable of withstanding the processing conditions that the container may be subjected to during product packaging.

Various coatings have been used as interior protective can coatings, including polyvinyl-chloride-based coatings and epoxy-based coatings incorporating bisphenol A ("BPA"). Each of these coating types, however, has potential shortcomings. For example, the recycling of materials containing polyvinyl chloride or related halide-containing vinyl polymers can be problematic. There is also a desire by some to reduce or eliminate certain BPA-based compounds commonly used to formulate food-contact epoxy coatings.

WO 2011/130671 A2 discloses an article comprising a metal substrate of a food or beverage container or a portion thereof; and a coating applied on at least a portion of a major surface of the metal substrate, wherein the coating comprises a film-forming amount of a polyether polymer having one or more segments of the following Formula I: -O-Ar-(Rₙ-Ar)ₙ-O-, wherein each Ar is independently an aryl or heteroaryl group, each n is independently 0 or 1, R, if present, is a divalent organic group, and the two oxygen atoms are each ether oxygen; and a glass transition temperature (Tg) of at least 70°C; and wherein the coating composition is at least substantially free of bisphenol A and the diglycidyl ether of bisphenol A.

WO 2007/048094 A2 describes a container comprising a food-contact surface, wherein at least a portion of the food-contact surface is coated with a composition comprising a polymer having one or more segments of Formula T: -O-Ar-Rₙ-C(O)-O-R¹-OC(O)-Rₙ-Ar-O- wherein each Ar is independently a divalent aryl group or heteroarylene group; each R is independently a divalent organic group; R¹ is a divalent organic group; and each n is 0 or 1.

US 5,591,788 discloses an epoxy cationic resin useful as a cathodic electrodeposition coating prepared by reacting in the presence of a suitable catalyst (A) a composition comprising (1) at least one diglycidyl ether of (a) an oxyalkylated aromatic diol or (b) an oxyalkylated cycloaliphatic diol or (c) certain oxyalkylated aliphatic diols and (2) at least one diglycidyl ether of a dihydric phenol with (B) at least one dihydric phenol and optionally (C) a monofunctional capping agent, wherein components (A-1) and (A-2) are employed in quantities such that from 10 to 75 weight percent of the diglycidyl ethers contained in component (A) are contributed by component (A-1), and from 25 to 90 weight percent of such glycidyl ethers are contributed by component (A-2); and the terminal oxirane groups in the thus formed epoxy resin are converted to cationic groups by reacting the resin with a nucleophilic compound and adding an organic acid and water at at least one point in the reaction.

WO 2008/137562 A1 describes a coated article, comprising: a container, or a portion thereof, comprising a metal substrate; and a multi-coat coating system applied to at least a portion of the metal substrate, the coating system comprising an overcoat composition comprising an overcoat thermoplastic polymer dispersed in an overcoat carrier; and an undercoat composition applied to the metal substrate comprising an undercoat thermoplastic polymer dispersed in an undercoat carrier.

What is needed in the marketplace is an improved binder system for use in coatings such as, for example, packaging coatings.

### SUMMARY

The present invention is as described in the appended claims.

Disclosed herein is a polymer useful in a variety of applications such as, for example, as a binder polymer of a coating composition. While the polymer of the present disclosure can have any suitable backbone chemistry, in preferred embodiments the polymer is a polyether polymer that preferably includes aromatic ether segments. The polymer is preferably substantially free or completely free of one or both of: (i) bound bisphenol A, bisphenol F, bisphenol S, and diepoxides thereof and (ii) one or more of bound polyhydric phenol monomers, and epoxides thereof, having estrogen agonist activity for a human estrogen receptor greater than or equal to that of bisphenol S, greater than or equal to that of 4,4'-(propane-2,2-diyl)bis(2,6-dibromophenol), or greater than or equal to that of 2,2-bis(4-hydroxyphenyl)propanoic acid. In preferred embodiments, the polymer is substantially free, more preferably essentially free, even more preferably essentially completely free, and optimally completely free of: bound bisphenol monomers and epoxides thereof. In some embodiments, the polymer is substantially free, more preferably completely free, of any bound polyhydric polyphenol or an epoxide thereof.

Preferred polymers of the present disclosure are suitable for use in a variety of end uses, including, e.g., as a film-forming material of a coating. In some such embodiments, the polymer has a glass transition temperature of at least 30°C, more preferably 60°C, and a number average molecular weight of at least 1,000, more preferably 2,000. Aryl or heteroaryl groups preferably constitute at least 25 weight percent of the polymer.

In preferred embodiments, the polymer also includes pendant hydroxyl groups (e.g., secondary hydroxyl groups) and, more preferably, one or more -CH₂-CH(OH)-CH₂- or -CH₂-CH₂-CH(OH)- segments, which are preferably derived from an oxirane group and located in a backbone of the polymer.

The polymer preferably includes one or more segments, and more preferably a plurality of segments, having one or more aryl or heteroaryl groups in a backbone portion of the segment. The polymer preferably includes a plurality of segments of the below Formula (I):

-O-Ar-O-

wherein "Ar" represents an aryl or heteroaryl group and each depicted oxygen is attached to an atom of the aryl or heteroaryl group and is preferably part of an ester or ether linkage, more preferably an ether linkage.

In some embodiments, the aryl or heteroaryl group depicted in Formula (I) includes one or more, more preferably two or more, substituent groups (i.e., other than hydrogen) that are attached to the ring preferably at an ortho position relative to one of the depicted oxygen atoms.

In preferred embodiments, the polymer includes one or more, and even more preferably a plurality, of segments of Formula (I) as represented in the below Formula (II): 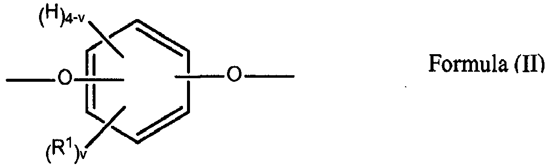 wherein:
- "H" denotes a hydrogen atom, if present,
- each R¹, if present, is independently an atom or group having an atomic weight of at least 15 Daltons,
- v is 0 to 4, and
- wherein two or more R¹ groups can join to form one or more cyclic groups.

Non-limiting examples of R¹ groups include groups having at least one carbon atom, a halogen atom, a sulfur-containing group, or any other suitable group preferably having an atomic weight of at least 15 Daltons that is preferably substantially non-reactive with an epoxy group. Organic groups are presently preferred, with organic groups that are free of halogen atoms being particularly preferred.

Typically, the polymer is a reaction product of ingredients including a diepoxide and a diol. In some embodiments, the polyether polymer of the present disclosure is a reaction product of ingredients including a first dihydric monophenol and a diepoxide of a second dihydric monophenol (which is preferably non-genotoxic), wherein the first and second dihydric monophenols are the same or different compounds. In one embodiment, the polyether polymer is a reaction product of ingredients including one or more of: (i) substituted or unsubstituted catechol, resorcinol, hydroquinone, or a mixture thereof and (ii) a diepoxide (e.g., a diglycidyl ether) of substituted or unsubstituted catechol, resorcinol, hydroquinone, or a mixture thereof.

Also disclosed herein is a coating composition that includes the polymer described herein, more preferably a polyether polymer described herein. The coating composition preferably includes at least a film-forming amount of the polymer and may optionally include one or more additional polymers. The coating composition is useful in coating a variety of substrates, including as an interior or exterior coating on metal packaging containers or portions thereof.

In preferred embodiments, the coating composition is useful as a food-contact coating on a food or beverage container. The coating composition is preferably substantially free of mobile or bound BPA or the diglycidyl ether of BPA ("BADGE"), and more preferably is completely free of BPA or BADGE. More preferably, the coating composition is substantially free, and more preferably completely free, of mobile or bound polyhydric phenols having estrogenic agonist activity greater than or equal to that of: 4,4'-(propane-2,2-diyl)diphenol, more preferably BPS, even more preferably 4,4'-(propane-2,2-diyl)bis(2,6-dibromophenol), and optimally 2,2-bis(4-hydroxyphenyl)propanoic acid. In certain preferred embodiments, the coating composition is substantially free, more preferably completely free, of bound bisphenol monomers and epoxides thereof. In some embodiments, the coating composition is substantially free, more preferably completely free, of bound polyhydric polyphenol monomers and epoxides thereof.

The coating composition may also have utility in a variety of other coating end uses, including, for example, coatings for valves and fittings, especially valves and fittings for use with potable water; pipes for conveying liquids, especially potable water pipes; and liquid storage tanks, especially potable water tanks, e.g., bolted steel water tanks.

In one embodiment, the coating composition of the present disclosure is a powder coating composition that preferably includes a base powder, formed at least in part, from the polymer of the present disclosure. The coating composition may include one or more optional ingredients in the particles of the base powder and/or in separate particles. Such optional ingredients may include, for example, crosslinker, cure accelerator, colored pigment, filler, flow additives, etc.

The present invention provides packaging articles having a coating composition as defined in the claims applied to a surface of the packaging article.

The packaging article is a food or beverage container, or a portion thereof (e.g., a twist-off closure lid, beverage can end, food can end, etc.), wherein at least a portion of an interior surface of the container is coated with the coating composition that is suitable for prolonged contact with a food or beverage product or other packaged product.

In one embodiment, a method of preparing a container is provided that includes an interior, food-contact coating of the present disclosure. The method includes: providing a coating composition described herein that includes a binder polymer and optionally a liquid carrier; and applying the coating composition to at least a portion of a surface of a substrate prior to or after forming the substrate into a container or a portion thereof having the coating composition disposed on an interior surface. Typically, the substrate is a metal substrate, although the coating composition may be used to coat other substrate materials if desired. Examples of other substrate materials may include fiberboard, plastic (e.g., polyesters such as, e.g., polyethylene terephthalates; nylons; polyolefins such as, e.g., polypropylene, polyethylene, and the like; ethylene vinyl alcohol; polyvinylidene chloride; and copolymers thereof) and paper.

In one embodiment, a method of forming food or beverage cans, or a portion thereof, is provided that includes: applying a coating composition described herein to a metal substrate (e.g., applying the coating composition to the metal substrate in the form of a planar coil or sheet), hardening the coating composition, and forming the substrate into a food or beverage can or a portion thereof.

In certain embodiments, forming the substrate into an article includes forming the substrate into a can end or a can body. In certain embodiments, the article is a two-piece drawn food can, three-piece food can, food can end, drawn and ironed food or beverage can, beverage can end, easy open can end, twist-off closure lid, and the like. Suitable metal substrates include, for example, steel or aluminum.

In certain embodiments, a packaging container is provided having: (a) a coating composition of the present disclosure disposed on at least a portion of an interior or exterior surface of the container and (b) a product packaged therein such as a food, beverage, cosmetic, or medicinal product.

In one embodiment, a packaging container having a coating composition of the present disclosure disposed on an interior surface is provided that includes a packaged product intended for human contact or consumption, e.g., a food or beverage product, a cosmetic product, or a medicinal product.

The above summary of the present invention is not intended to describe each disclosed embodiment or every implementation of the present invention. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list. Unless otherwise indicated, the structural representations included herein are not intended to indicate any particular stereochemistry and are intended to encompass all stereoisomers.

### DEFINITIONS

As used herein, the term "organic group" means a hydrocarbon group (with optional elements other than carbon and hydrogen, such as oxygen, nitrogen, sulfur, and silicon) that is classified as an aliphatic group, a cyclic group, or combination of aliphatic and cyclic groups (e.g., alkaryl and aralkyl groups).

The term "cyclic group" means a closed ring hydrocarbon group that is classified as an alicyclic group or an aromatic group, both of which can include heteroatoms.

The term "alicyclic group" means a cyclic hydrocarbon group having properties resembling those of aliphatic groups.

The term "aryl group" (e.g., an arylene group) refers to a closed aromatic ring or ring system such as phenylene, naphthylene, biphenylene, fluorenylene, and indenyl, as well as heteroarylene groups (e.g., a closed aromatic or aromatic-like ring hydrocarbon or ring system in which one or more of the atoms in the ring is an element other than carbon (e.g., nitrogen, oxygen, sulfur, etc.)). Suitable heteroaryl groups include furyl, thienyl, pyridyl, quinolinyl, isoquinolinyl, indolyl, isoindolyl, triazolyl, pyrrolyl, tetrazolyl, imidazolyl, pyrazolyl, oxazolyl, thiazolyl, benzofuranyl, benzothiophenyl, carbazolyl, benzoxazolyl, pyrimidinyl, benzimidazolyl, quinoxalinyl, benzothiazolyl, naphthyridinyl, isoxazolyl, isothiazolyl, purinyl, quinazolinyl, pyrazinyl, 1-oxidopyridyl, pyridazinyl, triazinyl, tetrazinyl, oxadiazolyl, thiadiazolyl, and so on. When such groups are divalent, they are typically referred to as "arylene" or "heteroarylene" groups (e.g., furylene, pyridylene, etc.)

A group that may be the same or different is referred to as being "independently" something.

Substitution on the organic groups of the compounds of the present disclosure is contemplated. As a means of simplifying the discussion and recitation of certain terminology used throughout this application, the terms "group" and "moiety" are used to differentiate between chemical species that allow for substitution or that may be substituted and those that do not allow or may not be so substituted. Thus, when the term "group" is used to describe a chemical substituent, the described chemical material includes the unsubstituted group and that group with O, N, Si, or S atoms, for example, in the chain (as in an alkoxy group) as well as carbonyl groups or other conventional substitution. Where the term "moiety" is used to describe a chemical compound or substituent, only an unsubstituted chemical material is intended to be included. For example, the phrase "alkyl group" is intended to include not only pure open chain saturated hydrocarbon alkyl substituents, such as methyl, ethyl, propyl, t-butyl, and the like, but also alkyl substituents bearing further substituents known in the art, such as hydroxy, alkoxy, alkylsulfonyl, halogen atoms, cyano, nitro, amino, carboxyl, etc. Thus, "alkyl group" includes ether groups, haloalkyls, nitroalkyls, carboxyalkyls, hydroxyalkyls, sulfoalkyls, etc. On the other hand, the phrase "alkyl moiety" is limited to the inclusion of only pure open chain saturated hydrocarbon alkyl substituents, such as methyl, ethyl, propyl, t-butyl, and the like. As used herein, the term "group" is intended to be a recitation of both the particular moiety, as well as a recitation of the broader class of substituted and unsubstituted structures that includes the moiety.

The term "polyhydric phenol" as used herein refers broadly to any compound having one or more aryl or heteroaryl groups (more typically one or more phenylene groups) and at least two hydroxyl groups attached to a same or different aryl or heteroaryl ring. Thus, for example, both hydroquinone and 4,4'-biphenol are considered to be polyhydric phenols. As used herein, polyhydric phenols typically have six carbon atoms in an aryl ring, although it is contemplated that aryl or heteroaryl groups having rings of other sizes may be used.

The term "polyhydric monophenol" refers to a polyhydric phenol that (i) includes an aryl or heteroaryl group (more typically a phenylene group) having at least two hydroxyl groups attached to the aryl or heteroaryl ring and (ii) does not include any other aryl or heteroaryl rings having a hydroxyl group attached to the ring. The term "dihydric monophenol" refers to a polyhydric monophenol that only includes two hydroxyl groups attached to the aryl or heteroaryl ring.

The term "polyhydric polyphenol" (which includes bisphenols) refers to a polyhydric phenol that includes two or more aryl or heteroaryl groups each having at least one hydroxyl group attached to the aryl or heteroaryl ring.

The term "bisphenol" refers to a polyhydric polyphenol having two phenylene groups that each include six-carbon rings and a hydroxyl group attached to a carbon atom of the ring, wherein the rings of the two phenylene groups do not share any atoms in common.

The term "phenylene" as used herein refers to a six-carbon atom aryl ring (e.g., as in a benzene group) that can have any substituent groups (including, e.g., hydrogen atoms, halogens, hydrocarbon groups, hydroxyl groups, ether linkages, ester linkages, etc.). Thus, for example, the following aryl groups are each phenylene rings: -C₆H₄-, -C₆H₃(CH₃)-, and -C₆H(CH₃)₂Cl-. In addition, for example, each of the aryl rings of a naphthalene group are phenylene rings.

The term "substantially free" of a particular mobile or bound compound means that the recited material or composition contains less than 1,000 parts per million (ppm) of the recited mobile or bound compound. The term "essentially free" of a particular mobile or bound compound means that the recited material or composition contains less than 100 parts per million (ppm) of the recited mobile or bound compound. The term "essentially completely free" of a particular mobile or bound compound means that the recited material or composition contains less than 5 parts per million (ppm) of the recited mobile or bound compound. The term "completely free" of a particular mobile or bound compound means that the recited material or composition contains less than 20 parts per billion (ppb) of the recited mobile or bound compound. If the aforementioned phrases are used without the term "mobile" or "bound" (e.g., "substantially free of BPA"), then the recited material or composition contains less than the aforementioned amount of the compound whether the compound is mobile or bound.

The term "mobile" means that the compound can be extracted from the cured coating when a coating (typically ∼1 mg/cm²) is exposed to a test medium for some defined set of conditions, depending on the end use. An example of these testing conditions is exposure of the cured coating to HPLC-grade acetonitrile for 24 hours at 25°C.

The term "bound" when used in combination with one of the aforementioned phrases in the context, e.g., of a bound compound of a polymer or other ingredient of a coating composition (e.g., a polymer that is substantially free of bound BPA) means that the polymer or other ingredient contains less than the aforementioned amount of structural units derived from the compound. For example, a polymer that is substantially free of bound BPA includes less than 1,000 ppm (or 0.1% by weight), if any, of structural units derived from BPA.

When the phrases "does not include any," "free of' (outside the context of the aforementioned phrases), and the like are used herein, such phrases are not intended to preclude the presence of trace amounts of the pertinent structure or compound which may be present due to environmental contaminants.

The term "estrogenic activity" or "estrogenic agonist activity" refers to the ability of a compound to mimic hormone-like activity through interaction with an endogenous estrogen receptor, typically an endogenous human estrogen receptor.

The term "food-contact surface" refers to the substrate surface of a container (typically an inner surface of a food or beverage container) that is in contact with, or intended for contact with, a food or beverage product. By way of example, an interior surface of a metal substrate of a food or beverage container, or a portion thereof, is a food-contact surface even if the interior metal surface is coated with a polymeric coating composition.

The term "unsaturated" when used in the context of a compound refers to a compound that includes at least one non-aromatic double bond.

The term "crosslinker" refers to a molecule capable of forming a covalent linkage between polymers or between two different regions of the same polymer.

The term "on," when used in the context of a coating applied on a surface or substrate, includes both coatings applied directly or indirectly to the surface or substrate. Thus, for example, a coating applied to a primer layer overlying a substrate constitutes a coating applied on the substrate.

Unless otherwise indicated, the term "polymer" includes both homopolymers and copolymers (e.g., polymers of two or more different monomers). Similarly, unless otherwise indicated, the use of a term designating a polymer class such as, for example, "polyether" is intended to include both homopolymers and copolymers (e.g., polyetherester copolymers).

The terms "comprises" and variations thereof do not have a limiting meaning where these terms appear in the description and claims.

The terms "preferred" and "preferably" refer to embodiments of the disclosure that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, "a," "an," "the," "at least one," and "one or more" are used interchangeably. Thus, for example, a coating composition that comprises "a" polyether can be interpreted to mean that the coating composition includes "one or more" polyethers.

Also herein, the recitations of numerical ranges by endpoints include all numbers subsumed within that range (e.g., 1 to 5 includes 1, 1.5, 2, 2.75, 3, 3.80, 4, 5, etc.). Furthermore, disclosure of a range includes disclosure of all subranges included within the broader range (e.g., 1 to 5 discloses 1 to 4, 1.5 to 4.5, 4 to 5, etc.).

### DETAILED DESCRIPTION OF ILLUSTRATIVE EMBODIMENTS

In one aspect, the present disclosure provides a coating composition that includes a polymer, more preferably a binder polymer, and even more preferably a polyether binder polymer. Although the ensuing discussion focuses primarily on coating end uses, it is contemplated that the polymer of the present disclosure, as well as intermediates thereof, may have utility in a variety of other end uses such as, for example, in adhesives or composites.

Coating compositions of the present disclosure preferably include at least a film-forming amount of the polymer described herein. In addition to the polymer, the coating composition may also include one or more additional ingredients such as, for example, a crosslinker, a liquid carrier, and any other suitable optional additives. Although any suitable cure mechanism may be used, thermoset coating compositions are preferred. Moreover, although coating compositions including a liquid carrier are presently preferred, it is contemplated that the polymer of the present disclosure may have utility in solid coating application techniques such as, for example, powder coating, laminate coatings, etc.

Coating compositions of the present disclosure may have utility in a variety of end uses, including packaging coating end uses. Other coating end uses may include industrial coatings, marine coatings (e.g., for ship hulls), storage tanks (e.g., metal or concrete), architectural coatings (e.g., on cladding, metal roofing, ceilings, garage doors, etc.), gardening tools and equipment, toys, automotive coatings, metal furniture coatings, coil coatings for household appliances, floor coatings, and the like.

In preferred embodiments, the coating composition is suitable for use as an adherent packaging coating and, more preferably, as an adherent coating on an interior and/or exterior surface of a food or beverage container. Thus, in preferred embodiments, the coating composition is suitable for use as a food-contact coating. It is also contemplated that the coating composition may have utility in cosmetic packaging or medical packaging coating end uses, and as a drug-contact coating in particular (e.g., as an interior coating of a metered dose inhaler can - commonly referred to as an "MDI" container). It is also contemplated that the coating composition may have utility in coating applications in which the coated substrate will contact bodily fluids such as, e.g., as an interior coating of a blood vial.

In preferred embodiments, the polymer of the present disclosure, which is preferably a polyether polymer, includes one or more segments of the below Formula (I):

-O-Ar-O- Formula (I)

wherein each "Ar" in Formula (I) represents an aryl or heteroaryl group and each of the depicted oxygen atoms is attached to an atom of the aryl or heteroaryl ring and is preferably present in an ether or ester linkage, more preferably an ether linkage. Ar groups having six-member rings are preferred, with Ar groups having six-member carbon rings being particularly preferred.

Preferred Ar groups include less than 20 carbon atoms, more preferably less than 11 carbon atoms, and even more preferably less than 8 carbon atoms. The Ar groups preferably have at least 4 carbon atoms, more preferably at least 5 carbon atoms, and even more preferably at least 6 carbon atoms. Substituted or unsubstituted phenylene groups are preferred Ar groups.

In some embodiments, the Ar group of Formula (I) can be two or more fused aryl rings. A naphthalene group is one example of such an Ar group.

In some embodiments, the Ar group depicted in Formula (I) includes one or more, more preferably two or more, substituent groups (more preferably "bulky" substituent groups). Suitable such substituent groups are discussed in further detail later herein. In some embodiments, one or more substituent groups are preferably attached to the ring preferably at an ortho or meta position, more preferably an ortho position, relative to at least one of the depicted oxygen atoms.

The segments of Formula (I) can be of any suitable size. Typically, the segments of Formula (I) will have an atomic weight of less than 1,000, preferably less than 600, more preferably less than 400 Daltons, even more preferably less than 350 Daltons. In some embodiments, the segments of Formula (I) have an atomic weight of less than 250 Daltons.

The segments of Formula (I) are preferably present in a backbone of the polymer.

In preferred embodiments, Ar is a phenylene group. A segment of Formula (I) in which Ar is a phenylene group is depicted below in Formula (II). 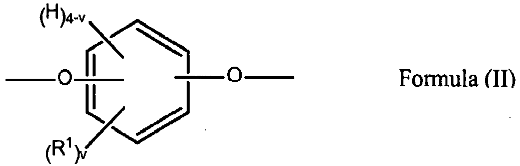 wherein:
- "H" denotes a hydrogen atom, if present;
- each R¹, if present, is preferably independently an atom or group preferably having at atomic weight of at least 15 Daltons that is preferably substantially non-reactive with an epoxy group;
- v is 0 to 4; and
- two or more R¹ groups can optionally join to form one or more cyclic groups.

The oxygen atoms shown in Formula (II) can be located at any suitable positions on the ring, including ortho, meta, or para positions.

-O-, H, and R¹ of the phenylene group can be located at any position on the ring relative to one another. In some embodiments where v is 1 to 4, one or more R¹ is located at an ortho position on the ring relative to at least one of the depicted oxygen atoms. Depending upon the positioning of the depicted oxygen atoms relative to one another (e.g., ortho, meta, or para), the segment of Formula (II) may include up to two ortho R¹, up to three ortho R¹, or up to four ortho R¹ relative to the two oxygen atoms. In one embodiment, each depicted oxygen includes at least one R¹ group located ortho to it.

While not wishing to be bound by theory, it is believed that for polyhydric monophenol compounds both (i) the absence of a second phenol ring and (ii) the presence of additional polar groups on the phenol ring can help avoid estrogenic activity. In addition, it is contemplated that the presence of one or more substituent groups on the phenol ring of polyhydric monophenol compounds, and particularly ortho substituent groups relative to the oxygen atoms, may also help avoid estrogenic activity.

The optimal chemical constituents, size, and/or configuration (e.g., linear, branched, etc.) of the one or more R¹ groups, if present, may depend on a variety of factors, including, for example, the location of the R¹ group on the aryl group. To avoid any ambiguity, the term "group" when used in the context of R¹ groups refers to both single atoms (e.g., a halogen atom) or molecules (i.e., two or more atoms).

Certain preferred segments of Formula (II) include up to four R¹ groups having an atomic weight of at least 15 Daltons. In some embodiments, the segments of Formula (II) include up to four R¹ groups having an atomic weight of at least 25, at least 40, or at least 50 Daltons. While the maximum suitable size of R¹ is not particularly limited, typically it will be less than 500 Daltons, more typically less than 100 Daltons, and even more typically less than 60 Daltons. Non-limiting examples of R¹ groups include groups having at least one carbon atom (e.g., organic groups), halogen atoms, sulfur-containing groups, or any other suitable group that is preferably substantially non-reactive with an epoxy group.

In some embodiments, each R¹, if present, preferably includes at least one carbon atom, more preferably 1 to 10 carbon atoms, and even more preferably 1 to 4 carbon atoms. R¹ will typically be a saturated or unsaturated hydrocarbon group, more typically saturated, that may optionally include one or more heteroatoms other than carbon or hydrogen atoms (e.g., N, O, S, Si, a halogen atom, etc.). Examples of suitable hydrocarbon groups may include substituted or unsubstituted: alkyl groups (e.g., methyl, ethyl, propyl, butyl, etc., including isomers thereof), alkenyl groups, alkynyl groups, alicyclic groups, aryl groups, or combinations thereof.

In some embodiments, the phenylene group depicted in Formula (II) includes at least one alkyl R¹ group. As discussed above, any suitable isomer may be used. Thus, for example, a linear butyl group may be used or a branched isomer such as an isobutyl group or a tert-butyl group. In one embodiment, a tert-butyl group (and more preferably a tert-butyl moiety) is a preferred R¹ group.

It is contemplated that R¹ may include one or more cyclic groups. In addition, R¹ may form a cyclic or polycyclic group with one or more other R¹ groups.

In some embodiments, the segments of Formula (II) may include one or more halogen atoms (as R¹ groups) located ortho to one or both of the depicted oxygen atoms. However, in certain preferred embodiments, the segments of Formulas (I) and (II) do not include any halogen atoms. Moreover, in certain preferred embodiments, the polymer including one or more segments of Formulas (I) or (II) is preferably free of halogen atoms.

In preferred embodiments, each R¹, if present, is preferably not reactive with an oxirane group at a temperature of less than 200°C.

Presently preferred segments of Formula (II) include only one phenylene group and, moreover, preferably include only one aryl group.

The segments of Formula (II) can be of any suitable molecular weight, including any of those discussed in conjunction with Formula (I). Typically, however, the segments of Formula (II) will have an atomic weight of 100 to 400 Daltons. In some embodiment, the segments of Formula (II) have an atomic weight of less than 250 Daltons.

In preferred embodiments, the polymer of the present disclosure includes a plurality of segments of Formula (II), which are preferably dispersed throughout a backbone of the polymer, more preferably a polyether backbone. In preferred embodiments, the segments of Formula (II) constitute a substantial portion of the overall mass of the polymer. Typically, segments of Formula (II) constitute at least 10 weight percent ("wt-%"), preferably at least 30 wt-%, more preferably at least 40 wt-%, even more preferably at least 50 wt-%, and optimally at least 55 wt-% of the polymer.

The weight percent of segments of Formula (II) in the polymer of the present disclosure may be below the amounts recited above in certain situations, and can even be substantially below. By way of example, the concentration of segments of Formula (II) may be outside the ranges recited above if the polymer of the present disclosure, which is preferably a polyether polymer, includes large molecular weight additional components such as may occur, for example, when the polymer is a copolymer such as an acrylic-containing copolymer (e.g., an acrylic-polyether copolymer formed by grafting acrylic onto a polyether polymer of the present disclosure). In such embodiments, the weight percent of segments of Formula (II) present in the polymer is preferably as described above (e.g., ≥ 10 wt-%, ≥ 30 wt-%, ≥ 40 wt-%, ≥ 50 wt-%, ≥ 55 wt-%), based on the weight percent of segments of Formula (II) relative to the total polyether fraction of the polymer (while not considering the total weight of non-polyether portions such as, for example, acrylic portions). In general, the total polyether fraction of the polymer can be calculated based on the total weight of polyepoxide and polyhydric phenol reactants incorporated into the polymer.

Depending upon the particular embodiment, the polymer of the present disclosure is preferably amorphous or semi-crystalline.

The polymer can include branching, if desired. In preferred embodiments, however, the polymer of the present disclosure is a linear or substantially linear polymer.

If desired, the backbone of the polymer may include step-growth linkages (e.g., condensation linkages) other than ether linkages (e.g., in addition to, or in place of, the ether linkages) such as, for example, amide linkages, carbonate linkages, ester linkages, urea linkages, urethane linkages, etc. Thus, for example, in some embodiments, the backbone may include both ester and ether linkages. In some embodiments, the polymer is a polyether polymer that is free of backbone condensation linkages or step-growth linkages other than ether linkages. In one embodiment, the polymer is free of backbone ester linkages.

The polymer of the present disclosure preferably includes hydroxyl groups. In preferred embodiments, the polymer includes a plurality of hydroxyl groups attached to the backbone. In preferred embodiments, polyether portions of the polymer backbone include secondary hydroxyl groups distributed throughout. Preferred secondary hydroxyl groups are present in -CH₂-CH(OH)-CH₂- or -CH₂-CH₂-CH(OH)- segments, which are preferably derived from an oxirane group. Such segments may be formed, for example, via reaction of an oxirane group and a hydroxyl group (preferably a hydroxyl group of a polyhydric monophenol). In some embodiments, -CH₂-CH(OH)-CH₂- or -CH₂-CH₂-CH(OH)- segments are attached to each of the ether oxygen atoms of preferred segments of Formula (I).

The backbone of the polymer of the present disclosure may include any suitable terminal groups, including, for example, epoxy and/or hydroxyl groups (e.g., a hydroxyl group attached to a terminal aryl or heteroaryl ring).

In preferred embodiments, the polymer of the present disclosure is formed using reactants that include at least one polyepoxide compound, more typically at least one diepoxide compound. The polyepoxide compound may be upgraded to form a binder polymer, more preferably a polyether binder polymer, of a suitable molecular weight via reaction with a suitable extender or combination of extenders. Polyhydric monophenols, and dihydric monophenols in particular, are preferred extenders. Examples of other suitable extenders may include polyacids (and diacids in particular) or phenol compounds having both a phenol hydroxyl group and a carboxylic group (e.g., para hydroxy benzoic acid and/or para hydroxy phenyl acetic acid). Conditions for such reactions are generally carried out using standard techniques that are known to one of skill in the art or that are exemplified in the examples section.

In certain preferred embodiments, the polymer of the present disclosure does not include any structural units derived from a bisphenol monomer. By avoiding the inclusion of any bisphenol monomers in the materials used to make preferred polymers of the present disclosure, there is no potential for any residual unreacted bisphenol monomer to be present in a composition containing the polyether polymer.

Bisphenol monomers typically have a molecular weight of less than 500 Daltons, more typically less than 400 Daltons, even more typically less than 350 Daltons, etc. Examples of bisphenol monomers include bisphenol A, bisphenol AP, bisphenol AF, bisphenol B, bisphenol BP, bisphenol C, bisphenol E, bisphenol F, bisphenol G, bisphenol I, bisphenol M, bisphenol P, bisphenol PH, bisphenol S, bisphenol TMC, bisphenol Z, 4,4'-(propane-2,2-diyl)bis(2,6-dibromophenol), 2,2-bis(4-hydroxyphenyl)propanoic acid, and the like. Bisphenol monomers are typically synthesized via reaction of a phenol compound with a ketone (e.g., formaldehyde, acetalaldehyde, acetone, cyclohexanone, acetophenone, etc.). Bisphenol A, for example, is synthesized via reaction of two equivalents of phenol with one equivalent of acetone.

The term "bisphenol monomer" as used herein does not include adducts of dihydric monophenols and linking compounds such as diacids or diepoxides that do not include any structural units derived from a bisphenol monomer. Thus, for example, a polyether polymer formed via reaction of the following ingredients is free of structural units derived from a bisphenol monomer: (i) a diepoxide of Formula (IV) and (ii) an adduct of two equivalents of hydroquinone reacted with one equivalent of 1,4-cyclohexanedimethanol diglycidyl ether ("CHDMDGE").

In some embodiments, the polymer of the present disclosure does not include any structural units derived from a polyhydric polyphenol monomer.

Although any suitable ingredients may be used to form the polymer, in presently preferred embodiments, the polymer is formed via reaction of ingredients that include: (a) a polyepoxide of a first polyhydric monophenol, more preferably a diepoxide of a first dihydric monophenol, even more preferably a diglycidyl ether of a first dihydric monophenol and (b) a second polyhydric monophenol, more preferably a dihydric monophenol, where the first and second polyhydric/dihydric monophenols are the same or different. In certain preferred embodiments, both of components (a) and (b) include a segment of Formula (I), and more preferably a segment of Formula (II).

A dihydric monophenol compound useful for incorporating segments of Formula (II) into the polymer of the present disclosure is depicted in the below Formula (III), wherein R¹ and v are as in Formula (II):

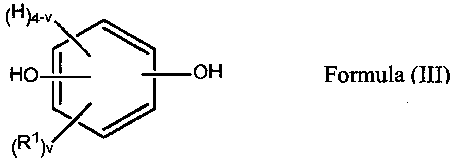

Examples of dihydric monophenol compounds of Formula (III) include catechol and substituted catechols (e.g., 3-methylcatechol, 4-methylcatechol, 4-tert-butyl catechol, and the like); hydroquinone and substituted hydroquinones (e.g., methylhydroquinone, 2,5-dimethylhydroquinone, trimethylhydroquinone, tetramethylhydroquinone, ethylhydroquinone, 2,5-diethylhydroquinone, triethylhydroquinone, tetraethylhydroquinone, tert-butylhydroquionine, 2,5-di-tert-butylhydroquinone, and the like); resorcinol and substituted resorcinols (e.g., 2-methylresorcinol, 4-methyl resorcinol, 2,5-dimethylresorcinol, 4-ethylresorcinol, 4-butylresorcinol, 4,6-di-tert-butylresorcinol, 2,4,6-tri-tert-butylresorcinol, and the like); and variants and mixtures thereof.

In one preferred embodiment, the polyether polymer of the present disclosure is formed using a diepoxide of 2,5-di-t-butylhydroquinone, which is depicted below.

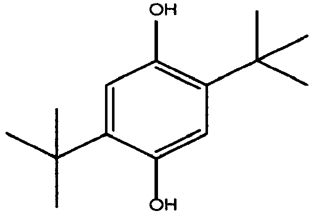

Preferred compounds of Formula (III) do not exhibit appreciable estrogenic activity. Preferred appreciably non-estrogenic compounds exhibit a degree of estrogen agonist activity, in a competent *in vitro* human estrogen receptor assay, that is less than that exhibited by genistein in the assay, more preferably less than that exhibited by 4,4'-(propane-2,2-diyl)diphenol in the assay, even more preferably less than that exhibited by bisphenol S in the assay, even more preferably less than that exhibited by 4,4'-(propane-2,2-diyl)bis(2,6-dibromophenol) in the assay, and optimally less than that exhibited by 2,2-bis(4-hydroxyphenyl)propanoic acid in the assay. It has been found, for example, that 2,5-di-t-butylhydroquinone does not exhibit appreciable estrogenic activity in a suitable *in vitro* assay whose results are known to be directly correlated to the results of the MCF-7 cell proliferation assay ("MCF-7 assay") through analysis of common reference compounds. In addition, hydroquinone has also been determined to be appreciably non-estrogenic.

The MCF-7 assay is a useful test for assessing whether a polyhydric phenol compound is appreciably non-estrogenic. The MCF-7 assay uses MCF-7, clone WS8, cells to measure whether and to what extent a substance induces cell proliferation via estrogen receptor (ER)-mediated pathways. The method is described in "Test Method Nomination: MCF-7 Cell Proliferation Assay of Estrogenic Activity" submitted for validation by CertiChem, Inc. to the National Toxicology Program Interagency Center for the Evaluation of Alternative Toxicological Methods (NICEATM) on January 19, 2006 (available online at http://iccvam.niehs.nih.gov/methods/endocrine/endodocs/SubmDoc.pdf).

A brief summary of the method of the aforementioned MCF-7 assay is provided below. MCF-7, clone WS8, cells are maintained at 37°C in RMPI (Roswell Park Memorial Institute medium) containing Phenol Red (e.g., GIBCO Catalog Number 11875119) and supplemented with the indicated additives for routine culture. An aliquot of cells maintained at 37°C are grown for 2 days in phenol-free media containing 5% charcoal stripped fetal bovine serum in a 25 cm² tissue culture flask. Using a robotic dispenser such as an epMotion 5070 unit, MCF-7 cells are then seeded at 400 cells per well in 0.2 ml of hormone-free culture medium in Corning 96-well plates. The cells are adapted for 3 days in the hormone-free culture medium prior to adding the test chemical to be assayed for activity. The media containing the test chemical is replaced daily for 6 days. At the end of the 7-day exposure to the test chemical, the media is removed, the wells are washed once with 0.2 ml of HBSS (Hanks' Balanced Salt Solution), and then assayed to quantify amounts of DNA per well using a micro-plate modification of the Burton diphenylamine (DPA) assay, which is used to calculate the level of cell proliferation.

Examples of appreciably non-estrogenic polyhydric phenols include polyhydric phenols that, when tested using the MCF-7 assay, exhibit a Relative Proliferative Effect ("RPE") having a logarithmic value (with base 10) of less than -2.0, more preferably an RPE of -3 or less, and even more preferably an RPE of -4 or less. RPE is the ratio between the EC50 of the test chemical and the EC50 of the control substance 17-beta estradiol times 100, where EC50 is "effective concentration 50%" or half-maximum stimulation concentration for cell proliferation measured as total DNA in the MCF-7 assay.

A Table is provided below that includes some exemplary preferred polyhydric compounds of Formula (III) and their expected or measured logarithmic RPE values in the MCF-7 assay.

| **Dihydric Monophenol Compound of Formula (III)** | **Reference Compound** | **Log RPE** |
|---|---|---|
| | 17β-estradiol | 2.00 |
| | Bisphenol S | -2 |
| | 4,4'-(propane-2,2-diyl)bis(2,6-dibromophenol) | -3 |
| | 2,2-bis(4-hydroxyphenyl)propanoic acid | less than -4 |
| 2,5-di-t-butylhydroquinone | | less than -4 |

While 2,5-di-t-butylhydroquinone and 2,2-bis(4-hydroxyphenyl)propanoic acid are shown in the above Table to have RPE values of less than -4, the RPE value of 2,5-di-t-butylhydroquinone is believed to be less than the RPE value of 2,2-bis(4-hydroxyphenyl)propanoic acid.

Use of a polyhydric monophenol having no appreciable estrogenic activity may be beneficial in the event that any unreacted, residual polyhydric phenol may be present in a cured coating composition. While the balance of scientific data does not indicate that the presence in cured coatings of very small amounts of residual polyhydric phenols having estrogenic activity in an *in vitro* recombinant cell assay pose a human health concern, the use of polyhydric monophenols having no appreciable estrogenic activity in such an assay may nonetheless be desirable from a public perception standpoint. Thus, in preferred embodiments, the polymer of the present disclosure is preferably formed using polyhydric monophenol compounds that do not exhibit appreciable estrogenic activity in the MCF-7 assay.

The dihydric monophenol compounds of Formula (III) can be converted to a diepoxide using any suitable process and materials. The use of epichlorohydrin in the epoxidation process is presently preferred.

The epoxy groups (also commonly referred to as "oxirane" groups) of the polyepoxide compound may be attached to the compound via any suitable linkage, including, for example, ether-containing or ester-containing linkages. Glycidyl ethers of polyhydric phenols and glycidyl esters of polyhydric phenols are preferred polyepoxide compounds, with diglycidyl ethers being particularly preferred.

A preferred polyepoxide compound for use in incorporating segments of Formula (II) into the polymer of the present disclosure is depicted in the below Formula (IV): 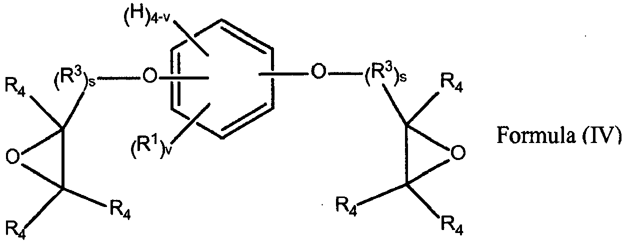 wherein:
- R¹ and v are as described above for Formula (II);
- s is 0 to 1, more preferably 1;
- R³, if present, is a divalent group, more preferably a divalent organic group; and
- preferably each R⁴, if present, is independently a hydrogen atom, a halogen atom, or a hydrocarbon group that may include one or more heteroatoms; more preferably each R⁴ is a hydrogen atom.

R³ is typically a hydrocarbyl group, which may optionally include one or more heteroatoms. Preferred hydrocarbyl groups include groups having from one to four carbon atoms, with methylene groups being particularly preferred. In some embodiments, R³ includes a carbonyl group. In one such embodiment, R³ includes a carbonyl group that is attached to the oxygen atom depicted in Formula (IV) (e.g., as in an ester linkage).

In presently preferred embodiments, R⁴ is a hydrogen atom.

Diepoxides have been successfully generated using dihydric monophenol compounds of Formula (III), and polyether polymers have been successfully produced therefrom.

Preferably, v of Formula (IV) is 1 or more (e.g., 1, 2, 3, or 4), more preferably at least 2. In certain preferred embodiments, the phenylene group of Formula (IV) includes an R¹ at one or both ortho ring positions for each depicted oxygen atom.

Preferred diepoxide compounds of Formula (IV) are non-mutagenic and more preferably non-genotoxic. A useful test for assessing both mutagenicity and genotoxicity is the mammalian *in vivo* assay known as the in vivo alkaline single cell gel electrophoresis assay (referred to as the "comet" assay). The method is described in: Tice, R.R. "The single cell gel/comet assay: a microgel electrophoretic technique for the detection of DNA damage and repair in individual cells." Environmental Mutagenesis. Eds. Phillips, D.H and Venitt, S. Bios Scientific, Oxford, UK, 1995, pp. 315-339. A negative test result in the comet assay indicates that a compound is non-genotoxic and, therefore, non-mutagenic, though a positive test does not definitively indicate the opposite and in such cases a more definitive test may be utilized (e.g., a two-year rat feeding study).

While not intending to be bound by any theory, it is believed that the presence of one or more R¹ groups, more preferably one or more ortho R¹ groups, on the phenylene ring of a diepoxide compound of Formula (IV) may contribute to the diepoxide being non-genotoxic. By way of example, 2,5-di-t-butylhydroquinone is non-genotoxic.

It is also contemplated that the polymer of the present disclosure may be formed via reaction of ingredients including the dihydric monophenol compound of Formula (III) and a diepoxide other than that of Formula (IV). Examples of such diepoxide compounds may include 1,4-cyclohexanedimethanol diglycidyl ether (CHDMDGE), neopentyl glycol diglycidyl ether, 2-methy-1,3-propanediol diglycidyl ether, tricyclodecane dimethanol diglycidyl ether, and combinations thereof. While not intending to be bound by any theory, some such aliphatic diepoxides (e.g., CHDMDGE and neopentyl glycol diglycidyl ether) that tend to yield polymers having lower glass transition temperature ("Tg") values may not be suitable for certain interior packaging coating applications in which a relatively high Tg polymer is desirable for purposes of corrosion resistance, although they may be suitable for exterior packaging coating applications or other end uses.

Any suitable polyhydric phenol may be used to upgrade the molecular weight of the diepoxides of Formula (IV) to form polyether polymers. However, the use of bisphenol A or polyhydric phenols that exhibit estrogenic agonist activity equivalent or greater to that of BPS is not preferred. In certain preferred embodiments, the polyepoxides of Formula (IV) are upgraded with polyhydric monophenols of Formula (III). Hydroquinone is a preferred such upgrade material.

While not intending to be bound by theory, it is thought to be more difficult to form a polyether polymer (using reasonable process times and conditions) using, as an extender, a polyhydric monophenol compound of Formula (III) substituted at multiple ortho ring positions with large substituent groups. For example, the inventors have found it difficult using conventional industrial processes to efficiently react 2,5-di-t-butylhydroquinone with diepoxide monomer to form a polyether polymer. (Somewhat surprisingly, however, 2,5-di-t-butylhydroquinone can undergo a reaction with epichlorohydrin to form a diepoxide that is reactive with dihydric monophenols that do not include ortho substitution.) While not wishing to be bound by theory, it is believed that the hydroxyl groups of certain ortho substituted dihydric monophenol compounds may not be sufficiently accessible to efficiently react with an oxirane group of a diepoxide monomer and form an ether linkage.

Thus, in certain embodiments, a dihydric monophenol that is preferably not hindered with any bulky substituent groups at an ortho position is used as an extender. In some embodiments, it may be advantageous to use, as an extender, a dihydric monophenol that either: (i) does not include any R¹ groups or (ii) does not include any R¹ groups at an ortho position.

If desired, one or more comonomers and/or co-oligomers may be included in the reactants used to generate the polymer of the present disclosure. Non-limiting examples of such materials include adipic acid, azelaic acid, terephthalic acid, isophthalic acid, and combinations thereof. The comonomers and/or co-oligomers may be included in an initial reaction mixture of polyepoxide and polyhydric phenol and/or may be post-reacted with the resulting polyether oligomer or polymer. In presently preferred embodiments, a comonomer and/or co-oligomer is not utilized to produce a polyether polymer of the present disclosure.

Preferred polymers of the present disclosure may be made in a variety of molecular weights. Preferred polyether polymers of the present disclosure have a number average molecular weight (Mn) of at least 2,000, more preferably at least 3,000, and even more preferably at least 4,000. The molecular weight of the polyether polymer may be as high as is needed for the desired application. Typically, however, the Mn of the polyether polymer, when adapted for use in a liquid coating composition, will not exceed 11,000. In some embodiments, the polyether polymer has an Mn of 5,000 to 8,000. In embodiments where the polymer of the present disclosure is a copolymer, such as for example a polyether-acrylic copolymer, the molecular weight of the overall polymer may be higher than that recited above, although the molecular weight of the polyether polymer portion will typically be as described above. Typically, however, such copolymers will have an Mn of less than 20,000.

Advancement of the molecular weight of the polymer may be enhanced by the use of a catalyst in the reaction of a diepoxide with one or more upgrade comonomers such as, e.g., a dihydric monophenol of Formula (III). Typical catalysts usable in the advancement of the molecular weight of the epoxy material of the present disclosure include amines, hydroxides (e.g., potassium hydroxide), phosphonium salts, and the like. A presently preferred catalyst is a phosphonium salt catalyst. The catalyst useful in the present disclosure is preferably present in an amount sufficient to facilitate the desired condensation reaction.

Alternatively, epoxy-terminated polymers of the present disclosure may be reacted with fatty acids to form polymers having unsaturated (e.g., air oxidizable) reactive groups, or with acrylic acid or methacrylic acid to form free-radically curable polymers.

Advancement of the molecular weight of the polymer may also be enhanced by the reaction of a hydroxyl- or epoxy-terminated polymer of the present disclosure with a suitable diacid (such as adipic acid).

The polymer of the present disclosure may exhibit any suitable polydispersity index (PDI). In embodiments in which the polymer is a polyether polymer intended for use as a binder polymer of a liquid applied packaging coating (e.g., a food or beverage can coating), the polyether polymer will typically exhibit a PDI of from 1.5 to 5, more typically from 2 to 3.5, and in some instances from 2.2 to 3 or from 2.4 to 2.8.

As discussed above, in certain preferred embodiments, the coating composition of the present disclosure is suitable for use in forming a food-contact packaging coating. In order to exhibit a suitable balance of coating properties for use as a food-contact packaging coating, including suitable corrosion resistance when in prolonged contact with packaged food or beverage products which may be of a corrosive nature, the polymer of the present disclosure preferably has a glass transition temperature ("Tg") of at least 60°C, more preferably at least 70°C, and even more preferably at least 80°C. In preferred embodiments, the Tg is less than 150°C, more preferably less than 130°C, and even more preferably less than 110°C. Tg can be measured via differential scanning calorimetry ("DSC") using the methodology disclosed in the Test Methods section. In preferred embodiments, the polymer is a polyether polymer exhibiting a Tg pursuant to the aforementioned Tg values.

While not intending to be bound by any theory, it is believed that it is important that the polymer exhibit a Tg such as that described above in applications where the coating composition will be in contact with food or beverage products during retort processing at high temperature (e.g., at temperatures at or above about 100°C and sometimes accompanied by pressures in excess of atmospheric pressure), and particularly when retort processing food or beverage products that are more chemically aggressive in nature. It is contemplated that, in some embodiments, such as, for example, where the coating composition is intended for use as an exterior varnish on a food or beverage container, the Tg of the polymer may be less than that described above (e.g., as low as about 30°C) and the coating composition may still exhibit a suitable balance of properties in the end use.

When the Tg of a polymer is referenced herein in the context of a coating composition including the polymer or a coated article coated with such a coating composition, the indicated Tg values for the polymer refers to the Tg of the polymer prior to any cure of a coating composition including the polymer.

While not intending to be bound by any theory, it is believed that the inclusion of a sufficient number of aryl and/or heteroaryl groups (typically phenylene groups) in the binder polymer of the present disclosure is an important factor for achieving suitable coating performance for food-contact packaging coatings, especially when the product to be packaged is a so called "hard-to-hold" food or beverage product. Sauerkraut is an example of a hard-to-hold product. In preferred embodiments, aryl and/or heteroaryl groups constitute at least 25 wt-%, more preferably at least 30 wt-%, even more preferably at least 35 wt-%, and optimally at least 45 wt-% of the polyether polymer, based on the total weight of aryl and heteroaryl groups in the polymer relative to the weight of the polyether polymer. The upper concentration of aryl/heteroaryl groups is not particularly limited, but preferably the amount of such groups is configured such that the Tg of the polyether polymer is within the Tg ranges previously discussed. The total amount of aryl and/or heteroaryl groups in the polyether polymer will typically constitute less than 80 wt-%, more preferably less than 75 wt-%, even more preferably less than 70 wt-%, and optimally less than 60 wt-% of the polyether polymer. The total amount of aryl and/or heteroaryl groups in the polyether polymer can be determined based on the weight of aryl- or heteroaryl-containing monomer incorporated into the polyether polymer and the weight fraction of such monomer that constitutes aryl or heteroaryl groups. In embodiments where the polymer is a polyether copolymer (e.g., a polyether-acrylic copolymer), the weight fraction of aryl or heteroaryl groups in the polyether polymer portion(s) of the copolymer will generally be as described above, although the weight fraction relative to the total weight of the copolymer may be less. Thus, in preferred embodiments, the polyether fraction of the polymer includes an amount of phenylene groups pursuant to the amounts recited above.

In one embodiment, the polymer of the present disclosure does not include any structural units derived from hydrogenated bisphenol A or a diepoxide of hydrogenated bisphenol A.

The polymers of the present disclosure can be applied to a substrate as part of a coating composition that includes a liquid carrier. The liquid carrier may be water, organic solvent, or mixtures of various such liquid carriers. Accordingly, liquid coating compositions of the present disclosure may be either water-based or solvent-based systems. Examples of suitable organic solvents include glycol ethers, alcohols, aromatic or aliphatic hydrocarbons, dibasic esters, ketones, esters, and the like, and combinations thereof. Preferably, such carriers are selected to provide a dispersion or solution of the polymer for further formulation.

It is expected that a polyether polymer of the present disclosure may be substituted for any conventional epoxy polymer present in a packaging coating composition known in the art. Thus, for example, the polyether polymer of the present disclosure may be substituted, for example, for a BPA/BADGE-containing polymer of an epoxy/acrylic latex coating system, for a BPA/BADGE containing polymer of a solvent based epoxy coating system, etc.

The amount of binder polymer of the present disclosure included in coating compositions may vary widely depending on a variety of considerations such as, for example, the method of application, the presence of other film-forming materials, whether the coating composition is a water-based or solvent-based system, etc. For liquid-based coating compositions, however, the binder polymer of the present disclosure will typically constitute at least 10 wt-%, more typically at least 30 wt-%, and even more typically at least 50 wt-% of the coating composition, based on the total weight of resin solids in the coating composition. For such liquid-based coating compositions, the binder polymer will typically constitute less than 90 wt-%, more typically less than 80 wt-%, and even more typically less than 70 wt-% of the coating composition, based on the total weight of resin solids in the coating composition.

In one embodiment, the coating composition is an organic solvent-based composition preferably having at least 20 wt-% non-volatile components ("solids"), and more preferably at least 25 wt-% non-volatile components. Such organic solvent-based compositions preferably have no greater than 40 wt-% non-volatile components, and more preferably no greater than 35 wt-% non-volatile components. For this embodiment, the non-volatile components preferably include at least 50 wt-% of the polymer of the present disclosure, more preferably at least 55 wt-% of the polymer, and even more preferably at least 60 wt-% of the polymer. For this embodiment, the non-volatile components preferably include no greater than 95 wt-% of the polymer of the present disclosure, and more preferably no greater than 85 wt-% of the polymer.

In some embodiments, the coating composition of the present disclosure is a solvent-based system that includes no more than a *de minimus* amount of water (e.g., less than 2 wt-% of water), if any. One example of such a coating composition is a solvent-based coating composition that includes no more than a *de minimus* amount of water and includes, on a solids basis, from 30 to 99 wt-%, more preferably from 50 to 85 wt-% of polyether polymer of the present disclosure; a suitable amount of crosslinker (e.g., a phenolic crosslinker or anhydride crosslinker); and optionally inorganic filler (e.g., TiO₂) or other optional additives. In one such solvent-based coating composition of the present disclosure, the polyether polymer is a high molecular weight polyether polymer that preferably has an Mn of 7,500 to 10,500, more preferably 8,000 to 10,000, and even more preferably 8,500 to 9,500.

In one embodiment, the coating composition is a water-based composition preferably having at least 15 wt-% non-volatile components ("solids"). In one embodiment, the coating composition is a water-based composition preferably having no greater than 50 wt-% non-volatile components, and more preferably no greater than 40 wt-% non-volatile components. For this embodiment, the non-volatile components preferably include at least 5 wt-% of the polymer of the present disclosure, more preferably at least 25 wt-% of the polymer, even more preferably at least 30 wt-% of the polymer, and optimally at least 40 wt-% of the polymer. For this embodiment, the non-volatile components preferably include no greater than 70 wt-% of the polymer of the present disclosure, and more preferably no greater than 60 wt-% of the polymer.

If a water-based system is desired, techniques may be used such as those described in U.S. Pat. Nos. 3,943,187; 4,076,676; 4,247,439; 4,285,847; 4,413,015; 4,446,258; 4,963,602; 5,296,525; 5,527,840; 5,830,952; 5,922,817; 7,037,584; and 7,189,787. Water-based coating systems of the present disclosure may optionally include one or more organic solvents, which will typically be selected to be miscible in water. The liquid carrier system of water-based coating compositions will typically include at least 50 wt-% of water, more typically at least 75 wt-% of water, and in some embodiments more than 90 wt-% or 95 wt-% of water. Any suitable means may be used to render the polymer of the present disclosure miscible in water. For example, the polymer may include a suitable amount of salt groups such as ionic or cationic salt groups to render the polymer miscible in water (or groups capable of forming such salt groups). Neutralized acid or base groups are preferred salt groups.

In some embodiments, the polymer of the present disclosure is covalently attached to one or more materials (e.g., oligomers or polymers) having salt or salt-forming groups to render the polymer water-dispersible. The salt or salt-forming group containing material may be, for example, oligomers or polymers that are (i) formed *in situ* prior to, during, or after formation of the polymer of the present disclosure or (ii) provided as preformed materials that are reacted with a preformed, or nascent, polymer of the present disclosure. The covalent attachment may be achieved through any suitable means including, for example, via reactions involving carbon-carbon double bonds, hydrogen abstraction (e.g., via a reaction involving benzoyl peroxide mediated grafting via hydrogen abstraction such as, e.g., described in U.S. Pat. No. 4,212,781), or the reaction of complimentary reactive functional groups such as occurs, e.g., in condensation reactions. In one embodiment, a linking compound is utilized to covalently attach the polyether polymer and the salt- or salt-forming-group-contaihing material. In certain preferred embodiments, the one or more materials having salt or salt-forming groups is an acrylic material, more preferably an acid- or anhydride-functional acrylic material.

In one embodiment, a water-dispersible polymer may be formed from preformed polymers (e.g., (a) an oxirane-functional polymer, such as, e.g., a polyether polymer, preferably having at least one segment of Formula (I) and (b) an acid-functional polymer such as, e.g., an acid-functional acrylic polymer) in the presence of an amine, more preferably a tertiary amine. If desired, an acid-functional polymer can be combined with an amine, more preferably a tertiary amine, to at least partially neutralize it prior to reaction with an oxirane-functional polymer preferably having at least one segment of Formula (I).

In another embodiment, a water-dispersible polymer may be formed from an oxirane-functional polymer (more preferably a polyether polymer described herein) preferably having at least one segment of Formula (I) that is reacted with ethylenically unsaturated monomers to form an acid-functional polymer, which may then be neutralized, for example, with a base such as a tertiary amine. Thus, for example, in one embodiment, a water-dispersible polymer preferably having at least one segment of Formula (I) may be formed pursuant to the acrylic polymerization teachings of U.S. Pat. Nos. 4,285,847 and/or 4,212,781, which describe techniques for grafting acid-functional acrylic groups (e.g., via use of benzoyl peroxide) onto epoxy-functional polymers. In another embodiment, acrylic polymerization may be achieved through reaction of ethylenically unsaturated monomers with unsaturation present in the polymer preferably containing at least one segment of Formula (I). See, for example, U.S. Pat. No. 4,517,322 and/or U.S. Published Application No. 2005/0196629 for examples of such techniques.

In another embodiment, a water-dispersible polymer may be formed having the structure E-L-A, wherein E is an epoxy portion of the polymer formed from a polyether polymer described herein, A is a polymerized acrylic portion of the polymer, and L is a linking portion of the polymer which covalently links E to A. Such a polymer can be prepared, for example, from (a) a polyether polymer described herein preferably having about two epoxy groups, (b) an unsaturated linking compound preferably having (i) a non-aromatic carbon-carbon double bond, conjugated non-aromatic carbon-carbon double bonds, or a carbon-carbon triple bond and (ii) a functional group capable of reacting with an epoxy group (e.g., a carboxylic group, a hydroxyl group, an amino group, an amido group, a mercapto group, etc.). Preferred linking compounds include 12 or less carbon atoms, with sorbic acid being an example of a preferred such linking compound. The acrylic portion preferably includes one or more salt groups or salt-forming groups (e.g., acid groups such as present in α,β-ethylenically saturated carboxylic acid monomers). Such polymers may be formed, for example, using a BPA-and BADGE-free polyether polymer of the present disclosure in combination with the materials and techniques disclosed in U.S. Pat. No. 5,830,952 or U.S. Published Application No. 2010/0068433.

In some embodiments, the coating composition of the present disclosure is substantially free of acrylic components. For example, in some embodiments the coating composition includes less than 5 wt-% or less than 1 wt-% of polymerized acrylic monomers (e.g., a mixture of ethylenically unsaturated monomers that include at least some monomer selected from acrylic acid, methacrylic acid, or esters thereof).

If desired, an acid-functional polymer can be combined with a base (more preferably an amine, even more preferably a tertiary amine) to at least partially neutralize it prior to reaction with an oxirane-functional polymer preferably having at least one segment of Formula (I).

In another embodiment, a polymer preferably containing segments of Formula (I) and including -CH₂-CH(OH)-CH₂- or -CH₂-CH₂-CH(OH)- segments, which are derived from an oxirane, is reacted with an anhydride. This provides acid functionality which, when combined with an amine or other suitable base to at least partially neutralize the acid functionality, is water dispersible.

In some embodiments, the coating composition of the present disclosure is a low-VOC coating composition that preferably includes no greater than 0.4 kilograms ("kg") of volatile organic compounds ("VOCs") per liter of solids, more preferably no greater than 0.3 kg VOC per liter of solids, even more preferably no greater than 0.2 kg VOC per liter of solids, and optimally no greater than 0.1 kg VOC per liter of solids.

Reactive diluents may optionally be used to yield such low-VOC coating compositions. The reactive diluent preferably functions as a solvent or otherwise lowers the viscosity of the blend of reactants. The use of one or more reactive diluents as a "solvent" eliminates or reduces the need to incorporate a substantial amount of other cosolvents (such as butanol) during processing.

Reactive diluents suitable for use in the present disclosure preferably include free-radical reactive monomers and oligomers. A small amount of reactive diluent that can undergo reaction with the polymer of the present disclosure may be used (e.g., hydroxy monomers such as 2-hydroxy ethylmethacrylate, amide monomers such as acrylamide, and N-methylol monomers such as N-methylol acrylamide). Suitable reactive diluents include, for example, vinyl compounds, acrylate compounds, methacrylate compounds, acrylamides, acrylonitriles, and the like and combinations thereof. Suitable vinyl compounds include, for example, vinyl toluene, vinyl acetate, vinyl chloride, vinylidene chloride, styrene, substituted styrenes, and the like and combinations thereof. Suitable acrylate compounds include butyl acrylate, ethyl acrylate, 2-ethylhexyl acrylate, isobutyl acrylate, tert-butyl acrylate, methyl acrylate, 2-hydroxyethyl acrylate, poly(ethylene glycol)acrylate, isobornyl acrylate, and combinations thereof. Suitable methacrylate compounds include, for example, butyl methacrylate, methyl methacrylate, ethyl methacrylate, isobutyl methacrylate, 2-hydroxyethyl methacrylate, poly(ethylene glycol)methacrylate, poly(propylene glycol)methacrylate, and the like and combinations thereof. Preferred reactive diluents include styrene and butyl acrylate. U.S. Pat. No. 7,037,584 provides additional discussion of suitable materials and methods relating to the use of reactive diluents in low-VOC packaging coating compositions.

Any suitable amount of one or more reactive diluents may optionally be employed in coating compositions of the present disclosure. For example, an amount of one or more reactive diluents sufficient to achieve the VOC content of the aforementioned low-VOC coating compositions may be used. In some embodiments, the coating composition includes at least 1 wt-%, at least 5 wt-%, or at least 10 wt-% of polymerized reactive diluent.

In one embodiment, a polyether polymer of the present disclosure is blended, in any suitable order, with acrylic component (e.g., acrylic resin) and reactive diluent. The polyether polymer and the acrylic resin are preferably reacted with one another (although they may be used as a simple blend), either before or after addition of reactive diluents, to form a polyether-acrylate copolymer. The polyether-acrylate and the reactive diluents are preferably further dispersed in water. The reactive diluent is then preferably polymerized in the presence of the polyether-acrylate copolymer to form a coating composition having the desired low VOC content. In this context, the term "reactive diluent" relates to monomers and oligomers that are preferably essentially non-reactive with the polyether resin or any carboxylic acid moiety (or other functional group) that might be present, e.g., on the acrylic resin, under contemplated blending conditions. The reactive diluents are also preferably capable of undergoing a reaction to form a polymer, described as an interpenetrating network with the polymer of the present disclosure, or with unsaturated moieties that may optionally be present, e.g., on an acrylic resin.

A coating composition of the present disclosure may also include other optional ingredients that do not adversely affect the coating composition or a cured coating composition resulting therefrom. Such optional ingredients are typically included in a coating composition to enhance composition esthetics; to facilitate manufacturing, processing, handling, or application of the composition; or to further improve a particular functional property of a coating composition or a cured coating composition resulting therefrom. For example, the composition that includes a polymer of the present disclosure may optionally include crosslinkers, fillers, catalysts, lubricants, pigments, surfactants, dyes, colorants, toners, coalescents, extenders, anticorrosion agents, flow control agents, thixotropic agents, dispersing agents, antioxidants, oxygen-scavenging materials, adhesion promoters, light stabilizers, anti-foaming agents, and mixtures thereof, as required to provide the desired film properties. Each optional ingredient is preferably included in a sufficient amount to serve its intended purpose, but not in such an amount to adversely affect a coating composition or a cured coating composition resulting therefrom.

Preferred coating compositions of the present disclosure are substantially free of one or both of mobile BPA or mobile BADGE, more preferably essentially free of these compounds, even more preferably essentially completely free, and optimally completely free of these compounds. The coating composition is also preferably substantially free of one or both of bound BPA and bound BADGE, more preferably essentially free of these compounds, even more preferably essentially completely free, and optimally completely free of these compounds. In addition, preferred compositions are also substantially free, more preferably essentially free, even more preferably essentially completely free, and optimally completely free of one or more, or all, of: bisphenol S, bisphenol F, and the diglycidyl ether of bisphenol F or bisphenol S. In some embodiments, the composition is substantially free, more preferably essentially free, even more preferably essentially completely free, and optimally completely free of bound bisphenol monomers and epoxides thereof.

The ingredients used to make the polymer of the present disclosure are preferably free of any dihydric phenol monomers, or corresponding diepoxides (e.g., diglycidyl ethers), that exhibit an estrogenic agonist activity in the MCF-7 assay greater than or equal to that that exhibited by 4,4'-(propane-2,2-diyl)diphenol in the assay. More preferably, the aforementioned ingredients are free of any dihydric phenols, or corresponding diepoxides, that exhibit an estrogenic agonist activity in the MCF-7 assay greater than or equal to that of bisphenol S. Even more preferably, the aforementioned ingredients are free of any dihydric phenol monomers, or corresponding diepoxides, that exhibit an estrogenic agonist activity in the MCF-7 assay greater than or equal to that of 4,4'-(propane-2,2-diyl)bis(2,6-dibromophenol). Optimally, the polymer does not include any structural units derived from a dihydric phenol monomer (or preferably any other polyhydric phenol monomer), or a diepoxide thereof, having estrogenic agonist activity greater than 2,2-bis(4-hydroxyphenyl)propanoic acid. The same is preferably true for any other components of a composition including the polymer.

Coating compositions of the present disclosure may be formulated using one or more optional curing agents (e.g., crosslinking resins, sometimes referred to as "crosslinkers"). The choice of particular crosslinker typically depends on the particular product being formulated. For example, some coating compositions are highly colored (e.g., gold-colored coatings). These coatings may typically be formulated using crosslinkers that themselves tend to have a yellowish color. In contrast, white coatings are generally formulated using non-yellowing crosslinkers, or only a small amount of a yellowing crosslinker.

Suitable examples of such curing agents are hydroxyl-reactive curing resins such as phenoplasts, aminoplast, blocked or unblocked isocyanates, or mixtures thereof.

Suitable phenoplast resins include the condensation products of aldehydes with phenols. Formaldehyde and acetaldehyde are preferred aldehydes. Various phenols can be employed such as phenol, cresol, p-phenylphenol, p-tert-butylphenol, p-tert-amylphenol, cyclopentylphenol, and compounds of Formula (III).

Suitable aminoplast resins are the condensation products of aldehydes such as formaldehyde, acetaldehyde, crotonaldehyde, and benzaldehyde with amino- or amido-group-containing substances such as urea, melamine, and benzoguanamine. Examples of suitable aminoplast crosslinking resins include, without limitation, benzoguanamine-formaldehyde resins, melamine-formaldehyde resins, etherified melamine-formaldehyde, and urea-formaldehyde resins.

Examples of other generally suitable curing agents are the blocked or non-blocked aliphatic, cycloaliphatic or aromatic di-, tri-, or poly-valent isocyanates, such as hexamethylene diisocyanate, cyclohexyl-1,4-diisocyanate, and the like. Further non-limiting examples of generally suitable blocked isocyanates include isomers of isophorone diisocyanate, dicyclohexylmethane diisocyanate, toluene diisocyanate, diphenylmethane diisocyanate, phenylene diisocyanate, tetramethyl xylene diisocyanate, xylylene diisocyanate, and mixtures thereof. In some embodiments, blocked isocyanates are used that have an Mn of at least 300, more preferably at least 650, and even more preferably at least 1,000.

Polymeric blocked isocyanates are useful in certain embodiments. Some examples of suitable polymeric blocked isocyanates include a biuret or isocyanurate of a diisocyanate, a trifunctional "trimer," or a mixture thereof. Examples of suitable blocked polymeric isocyanates include TRIXENE BI 7951, TRIXENE BI 7984, TRIXENE BI 7963, TRIXENE BI 7981 (TRIXENE materials are available from Baxenden Chemicals, Ltd., Accrington, Lancashire, England), DESMODUR BL 3175A, DESMODUR BL3272, DESMODUR BL3370, DESMODUR BL 3475, DESMODUR BL 4265, DESMODUR PL 340, DESMODUR VP LS 2078, DESMODUR VP LS 2117, and DESMODUR VP LS 2352 (DESMODUR materials are available from Bayer Corp., Pittsburgh, PA, USA), or combinations thereof. Examples of suitable trimers may include a trimerization product prepared from on average three diisocyanate molecules or a trimer prepared from on average three moles of diisocyanate (e.g., HMDI) reacted with one mole of another compound such as, for example, a triol (e.g., trimethylolpropane).

The level of curing agent (e.g., crosslinker) used will typically depend on the type of curing agent, the time and temperature of the bake, the molecular weight of the binder polymer, and the desired coating properties. If used, the crosslinker is typically present in an amount of up to 50 wt-%, preferably up to 30 wt-%, and more preferably up to 15 wt-%. If used, a crosslinker is preferably present in an amount of at least 0.1 wt-%, more preferably at least 1 wt-%, and even more preferably at least 1.5 wt-%. These weight percentages are based upon the total weight of the resin solids in the coating composition.

In some embodiments, the coating compositions of the present disclosure are "formaldehyde-free" coatings that include, or liberate as a result of curing, no greater than 1% by weight formaldehyde, no greater than 0.5% by weight formaldehyde, no greater than 0.25% by weight formaldehyde, or no greater than 5 ppm formaldehyde. The absence of phenolic resin and/or melamine is believed to contribute to a coating composition that is appreciably free of formaldehyde.

As previously discussed, in some embodiments, the coating composition of the present disclosure includes an acrylic component which may optionally be covalently attached to the polyether polymer described herein. In some embodiments, the acrylic component may be present as a separate polymer blended with the polyether polymer (in addition to any acrylic component that may optionally be covalently attached to the polyether polymer).

The coating composition of the present disclosure may include any amount of acrylic component suitable to produce the desired film or coating properties. In preferred acrylic-component-containing embodiments, the coating composition includes an amount of acrylic component of at least 5 wt-%, more preferably at least 10 wt-%, and even more preferably at least 15 wt-%, as determined by an amount of a monomer mixture used to prepare the acrylic component and based on the total weight of resin solids in the coating system. In preferred embodiments, the coating composition preferably includes an amount of acrylic component of less than 95 wt-%, more preferably less than 75 wt-%, and even more preferably less than 30 to 40 wt-%, as determined by an amount of a monomer mixture used to prepare the acrylic component and based on the total weight of resin solids in the coating system.

In certain water-based embodiments in which at least some of the acrylic component is covalently attached to the polyether polymer, at least a portion of the acrylic monomers used to form the acrylic component are preferably capable of rending the polyether polymer dispersible in water. In such embodiments, the acrylic component is preferably formed from an ethylenically unsaturated monomer mixture that includes one or more α,β-unsaturated carboxylic acid. The one or more α,β-unsaturated carboxylic acid preferably renders the polymer water-dispersible after neutralization with a base. Suitable α,β-usaturated carboxylic acid monomers include, for example, acrylic acid, methacrylic acid, crotonic acid, itaconic acid, maleic acid, mesaconic acid, citraconic acid, sorbic acid, fumaric acid, and mixtures thereof. The acrylic monomer also can include, for example, acrylamide or methacrylamide which can render the polymer water dispersible. Preferred acrylic components for use in packaging coating applications are substantially free, or completely free, of acrylamide- or methacrylamide-type monomers.

The acrylic monomers used to form the acrylic component can include from 0% up to 95%, by total weight of monomers, of vinyl monomers.

The acrylic component preferably includes one or more non-functional monomers and one or more functional monomers (more preferably acid-functional monomers, and even more preferably acid-functional acrylic monomers). In presently preferred embodiments, the acrylic component includes one or more vinyl monomers. The acrylic component is preferably prepared through chain-growth polymerization using one or more ethylenically unsaturated monomers. Examples of suitable ethylenically unsaturated monomers include non-functional monomers such as styrene, halostyrenes, α-methylstyrene, alkyl esters of acrylic acid (e.g., methyl acrylate, ethyl acrylate, butyl acrylate, etc.), alkyl esters of methacrylic acid and/or crotonic acid (e.g., methyl, ethyl, propyl, butyl, pentyl, hexyl, octyl, decyl, dodecyl methacrylates and crotonates), vinyl cyclohexane, vinyl cyclooctane, vinyl cyclohexene, hexanediol diacrylate, dimethyl maleate, dibutyl fumarate and similar diesters, vinyl naphthalene, vinyl toluene, vinyl acetate, vinyl propionate, vinyl cyclooctane, ally methacrylate, 2-ethylhexyl acrylate, and diesters of maleic anhydride; and functional monomers such as acid-functional monomers (e.g., acrylic acid, methacrylic acid, crotonic acid, itaconic acid, maleic anhydride and esters thereof, mesaconic acid, citraconic acid, fumaric acid, and sorbic acid), amide-functional monomers (e.g., acrylamide, methacrylamide, etc.), hydroxy-functional monomers (e.g., hydroxyalkyl acrylate or methacrylate monomers such as hydroxyethyl acrylate (HEA), hydroxyethyl methacrylate (HEMA), hydroxypropyl acrylate (HPA), hydroxypropyl methacrylate (HPMA), etc.); and variations and combinations thereof. Preferred non-functional monomers include styrene, ethyl acrylate, butyl methacrylate, and combinations thereof. Preferred functional monomers include acrylic acid, methacrylic acid, and combinations thereof.

In some embodiments, the acrylic component is at least substantially free of styrene.

The combination and/or ratio(s) of the above monomers may be adjusted to provide a desired coating or film property. Preferably, at least a portion of the above monomers are capable of rendering the resin system dispersible in an aqueous carrier. Examples of monomers capable of rendering the resin system dispersible in an aqueous carrier include acid-functional monomers that form salt groups upon neutralization with a base.

While not intending to be bound by theory, it is believed that, for certain embodiments of the present disclosure, the Tg of the acrylic component is a factor that contributes to coating compositions exhibiting suitable resistance to retort processes associated with certain food and beverage products. In general, the Fox equation may be employed to calculate the theoretical Tg of the acrylic component. In some embodiments, the acrylic component has a Tg of at least 40°C, preferably at least 60°C, more preferably at least 80°C, and even more preferably at least 90°C. By way of example, a water-dispersible polymer having an E-L-A structure described previously herein can include an acrylic component having such a Tg. The acrylic component preferably has a Tg of less than 280°C, more preferably less than 220°C, even more preferably less than 180°C, even more preferably less than 160°C, and optimally less than 150°C. In some embodiments, the acrylic component has a Tg of less than 130°C, or less than 120°C. In some embodiments, the acrylic component has a Tg greater than 100°C, more preferably from 100°C to 120°C.

In other embodiments (e.g., where resistance to stringent retort processes is not a concern), it may be beneficial to use an acrylic component having a Tg of less than 50°C, less than 40°C, or even less than 30°C.

A coating composition of the present disclosure may also include other optional polymers that do not adversely affect the coating composition or a cured coating composition resulting therefrom. Such optional polymers are typically included in a coating composition as a filler material, although they can also be included, for example, as a binder polymer, a crosslinking material, or to provide desirable properties. One or more optional polymers (e.g., filler polymers) can be included in a sufficient amount to serve an intended purpose, but not in such an amount to adversely affect a coating composition or a cured coating composition resulting therefrom.

Such additional polymeric materials can be nonreactive, and hence, simply function as fillers. Such optional nonreactive filler polymers include, for example, polyesters, acrylics, polyamides, polyethers, and novalacs. Alternatively, such additional polymeric materials or monomers can be reactive with other components of the composition (e.g., an acid-functional or unsaturated polymer). If desired, reactive polymers can be incorporated into the compositions of the present disclosure, to provide additional functionality for various purposes, including crosslinking or dispersing the polymer of the present disclosure into water. Examples of such reactive polymers include, for example, functionalized polyesters, acrylics, polyamides, and polyethers.

One preferred optional ingredient is a catalyst to increase the rate of cure. Examples of catalysts, include, but are not limited to, strong acids (e.g., phosphoric acid, dodecylbenzene sulphonic acid (DDBSA), available as CYCAT 600 from Cytec, methane sulfonic acid (MSA), p-toluene sulfonic acid (pTSA), dinonylnaphthalene disulfonic acid (DNNDSA), and triflic acid); quaternary ammonium compounds; phosphorous compounds; and tin, titanium, and zinc compounds. Specific examples include, but are not limited to, a tetraalkyl ammonium halide, a tetraalkyl or tetraaryl phosphonium iodide or acetate, tin octoate, zinc octoate, triphenylphosphine, and similar catalysts known to persons skilled in the art. If used, a catalyst is preferably present in an amount of at least 0.01 wt-%, and more preferably at least 0.1 wt-%, based on the weight of nonvolatile material in the coating composition. If used, a catalyst is preferably present in an amount of no greater than 3 wt-%, and more preferably no greater than 1 wt-%, based on the weight of nonvolatile material in the coating composition.

Another useful optional ingredient is a lubricant (e.g., a wax), which facilitates manufacture of fabricated metal articles (e.g., closures and food or beverage can ends) by imparting lubricity to sheets of coated metal substrate. Non-limiting examples of suitable lubricants include, for example, natural waxes such as Carnauba wax or lanolin wax, polytetrafluoroethane (PTFE) and polyethylene-type lubricants. If used, a lubricant is preferably present in the coating composition in an amount of at least 0.1 wt-%, and preferably no greater than 2 wt-%, and more preferably no greater than 1 wt-%, based on the total weight of nonvolatile material in the coating composition.

Another useful optional ingredient is a pigment, such as titanium dioxide. If used, a pigment is present in the coating composition in an amount of no greater than 70 wt-%, more preferably no greater than 50 wt-%, and even more preferably no greater than 40 wt-%, based on the total weight of solids in the coating composition.

Surfactants can be optionally added to the coating composition, e.g., to aid in flow and wetting of the substrate. Examples of surfactants, include, but are not limited to, nonylphenol polyethers and salts and similar surfactants known to persons skilled in the art. If used, a surfactant is preferably present in an amount of at least 0.01 wt-%, and more preferably at least 0.1 wt-%, based on the weight of resin solids. If used, a surfactant is preferably present in an amount no greater than 10 wt-%, and more preferably no greater than 5 wt-%, based on the weight of resin solids.

In some embodiments, the polyether polymer of the present disclosure is included in a layer of a monolayer or multilayer coating system including a layer incorporating a thermoplastic dispersion (e.g., a halogenated polyolefin dispersion such as, e.g., a polyvinylchloride ("PVC") organosol). In one embodiment, the polyether polymer is included in a primer layer of such a multilayer coating system including another layer (e.g., a top layer) incorporating a thermoplastic dispersion. Such multilayer coating systems are described in U.S. Provisional Application No. 61/681,590 entitled "Container Coating System" (Attorney Docket Number 160-P-2218USP1) filed on August 9, 2012. In another embodiment, the polyether polymer is included in the layer incorporating the thermoplastic dispersion, e.g., as a stabilizer for PVC and/or as a co-resin, which is described in U.S. Provisional Application No. 61/681,602 entitled "Stabilizer and Coating Compositions Thereof' (Attorney Docket Number 160P-2207USP1) filed on August 9, 2012.

In some embodiments, the coating composition is "PVC-free." That is, in some embodiments, the coating composition preferably contains less than 2 wt-% of vinyl chloride materials or other halogenated vinyl materials, more preferably less than 0.5 wt-% of such materials, and even more preferably less than 1 ppm of such materials.

The coating composition of the present disclosure can be present as a layer of a mono-layer coating system or one or more layers of a multi-layer coating system. The coating composition can be used as a primer coat, an intermediate coat, a top coat, or a combination thereof. The coating thickness of a particular layer and the overall coating system will vary depending upon the coating material used, the substrate, the coating application method, and the end use for the coated article. Mono-layer or multi-layer coating systems including one or more layers formed from a coating composition of the present disclosure may have any suitable overall coating thickness, but will typically have an overall average dry coating thickness of from 1 to 60 microns and more typically from 2 to 15 microns. Typically, the total coating thickness for rigid metal food or beverage can applications will be 3 to 10 microns. Coating systems for closure applications may have an average total coating thickness up to 15 microns. In certain embodiments in which the coating composition is used as an interior coating on a drum (e.g., a drum for use with food or beverage products), the total coating thickness may be approximately 25 microns.

The coating compositions of the present disclosure are particularly useful for coating metal substrates.

The coating composition of the present disclosure may be applied to a substrate either prior to, or after, the substrate is formed into an article (such as, for example, a food or beverage container or a portion thereof). In one embodiment, a method is provided that includes: applying a coating composition described herein to a metal substrate (e.g., applying the composition to the metal substrate in the form of a planar coil or sheet), hardening the composition, and forming (e.g., via stamping) the substrate into a packaging container or a portion thereof (e.g., a food or beverage can or a portion thereof). For example, beverage can ends (e.g., riveted beverage can ends having a rivet for attaching a pulltab thereto) having a cured coating of the present disclosure on a surface thereof can be formed in such a process. In another embodiment, the coating composition is applied to a preformed metal food or beverage can, or a portion thereof. For example, in some embodiments, the coating composition is spray applied to an interior surface of a preformed food or beverage can (e.g., as typically occurs with "two-piece" food or beverage cans).

In one embodiment, the coating composition of the present disclosure is a water-based "inside spray" coating suitable for spray application to the interior surfaces of a two-piece food or beverage can, which preferably includes from 15 to 40 wt-% of nonvolatile materials, more preferably 15 to 25 wt-% nonvolatile materials for inside spray for two-piece beer and beverage cans (e.g., two-piece steel or aluminum beer or beverage cans).

The metal substrate used in forming rigid food or beverage cans, or portions thereof, typically has a thickness in the range of 0.005 inches (0.13 mm) to 0.025 inches (0.64 mm). Electrotinplated steel, cold-rolled steel, and aluminum are commonly used as metal substrates for food or beverage cans, or portions thereof. In embodiments in which a metal foil substrate is employed in forming, e.g., a packaging article, the thickness of the metal foil substrate may be even thinner than that described above.

After applying the coating composition onto a substrate, the composition can be cured using a variety of processes, including, for example, oven baking by either conventional or convectional methods, or any other method that provides an elevated temperature suitable for curing the coating. The curing process may be performed in either discrete or combined steps. For example, substrates can be dried at ambient temperature to leave the coating compositions in a largely un-crosslinked state. The coated substrates can then be heated to fully cure the compositions. In certain instances, coating compositions of the present disclosure can be dried and cured in one step.

The cure conditions will vary depending upon the method of application and the intended end use. The curing process may be performed at any suitable temperature, including, for example, oven temperatures in the range of from 100°C to 300°C, and more typically from 177°C to 250°C. If metal coil is the substrate to be coated, curing of the applied coating composition may be conducted, for example, by heating the coated metal substrate over a suitable time period to a peak metal temperature ("PMT") of preferably greater than 350°F (177°C). More preferably, the coated metal coil is heated for a suitable time period (e.g., 5 to 900 seconds, more typically 5 to 30 seconds) to a PMT of at least 425°F (218°C).

The coating compositions of the present disclosure may be suitable, for example, for spray coating, coil coating, wash coating, sheet coating, and side seam coating (e.g., food can side seam coating). A further discussion of such application methods is provided below. It is contemplated that coating compositions of the present disclosure may be suitably used in each of these application methods discussed further below, including the end uses associated therewith.

Spray coating includes the introduction of the coated composition into the inside of a preformed packaging container. Typical preformed packaging containers suitable for spray coating include food cans, beer and beverage containers, and the like. The spray process preferably utilizes a spray nozzle capable of uniformly coating the inside of the preformed packaging container. The sprayed preformed container is then subjected to heat to remove any residual carriers (e.g., water or solvents) and harden the coating.

A coil coating is described as the coating of a continuous coil composed of a metal (e.g., steel or aluminum). Once coated, the coating coil is subjected to a short thermal, ultraviolet, and/or electromagnetic curing cycle, for hardening (e.g., drying and curing) of the coating. Coil coatings provide coated metal (e.g., steel and/or aluminum) substrates that can be fabricated into formed articles, such as two-piece drawn food cans, three-piece food cans, food can ends, drawn and ironed cans, beverage can ends, and the like. In one embodiment, the coating composition of the present disclosure is a water-based coating composition that is applied to aluminum or steel coating from which riveted beverage can ends are subsequently fabricated.

A wash coating is commercially described as the coating of the exterior of two-piece drawn and ironed ("D&I") cans with a thin layer of protectant coating. The exterior of these D&I cans are "wash-coated" by passing pre-formed two-piece D&I cans under a curtain of a coating composition. The cans are inverted, that is, the open end of the can is in the "down" position when passing through the curtain. This curtain of coating composition takes on a "waterfall-like" appearance. Once these cans pass under this curtain of coating composition, the liquid coating material effectively coats the exterior of each can. Excess coating is removed through the use of an "air knife." Once the desired amount of coating is applied to the exterior of each can, each can is passed through a thermal, ultraviolet, and/or electromagnetic curing oven to harden (e.g., dry and cure) the coating. The residence time of the coated can within the confines of the curing oven is typically from 1 minute to 5 minutes. The curing temperature within this oven will typically range from 150°C to 220°C.

A sheet coating is described as the coating of separate pieces of a variety of materials (e.g., steel or aluminum) that have been typically pre-cut into square or rectangular "sheets." Typical dimensions of these sheets are approximately one square meter. Once coated, the coating is hardened (e.g., dried and cured) and the coated sheets are collected and prepared for subsequent fabrication. Sheet coatings provide coated metal (e.g., steel or aluminum) substrate that can be successfully fabricated into formed articles, such as two-piece drawn food cans, three-piece food cans, food can ends, drawn and ironed cans, beverage can ends (including, e.g., riveted beverage can ends having a rivet for attaching a pull tab thereto), and the like. In one embodiment, the coating composition of the present disclosure is a solvent-based coating composition that is applied to steel or aluminum sheets that are subsequently fabricated into the above described packaging articles.

A side seam coating is described as the application of a powder coating or the spray application of a liquid coating over the welded area of formed three-piece food cans. When three-piece food cans are being prepared, a rectangular piece of coated substrate is formed into a cylinder. The formation of the cylinder is rendered permanent due to the welding of each side of the rectangle via thermal welding. Once welded, each can typically requires a layer of coating, which protects the exposed "weld" from subsequent corrosion or other effects to the contained foodstuff. The coatings that function in this role are termed "side seam stripes." Typical side seam stripes are spray applied and cured quickly via residual heat from the welding operation in addition to a small thermal, ultraviolet, and/or electromagnetic oven.

Other commercial coating application and curing methods are also envisioned, for example, electrocoating, extrusion coating, laminating, powder coating, and the like.

In embodiments in which the coating composition is intended for use as an internal packaging coating, the coating composition, when suitably cured, preferably has suitable corrosion resistance to withstand prolonged contact with the packaged product, as well as any processing conditions, without unsuitably degrading. Interior packaging coating compositions, when applied on suitable metal substrate (e.g., a metal substrate used in the below Examples section) at a coating thickness consistent with that typically used in the particular packaging end use and suitably cured, are preferably capable of withstanding being immersed in a 2% aqueous NaCl solution for 90 minutes at a temperature of 121°C and a pressure of 1.05 kilograms per square centimeter without exhibiting any unsuitable film integrity reduction such as blistering or loss of adhesion (e.g., using the methods of the Test Methods section). Interior beverage can end coatings are preferably capable of passing the above test using an aqueous 1% citric acid solution in place of the 2% NaCl solution.

The polymer of the present disclosure can be used in powder coating applications for use in forming an adherent polymeric coating. Thus, in some embodiments, the coating composition of the present disclosure is a powder coating composition that preferably does not include a liquid carrier (although it may include trace amounts of residual water or organic solvent). The powder coating composition is preferably in the form of a finely divided, free flowing powder. In preferred embodiments, the powder composition is a thermosettable powder composition that forms a thermoset coating when suitably cured. The discussion that follows relates to powder coating embodiments of the present disclosure.

The powder coating composition of the present disclosure may be particularly useful in end uses in which a coated substrate is intended to contact substances for consumption by humans or intimate contact with humans. For example, the powder coating compositions may be used to coat: surfaces of food or beverage containers, cosmetic containers, or medicinal containers; surfaces of valves and fittings, including surfaces intended for contact with potable water or other consumable liquids; surfaces of pipes, including internal surfaces of water pipes or other liquid conveying pipes; and surfaces of tanks, including internal surfaces of water tanks such as bolted steel tanks. For powder coatings that will contact potable water, the cured powder coating composition should preferably comply with ANSI/NSF standard 61. Some examples of fittings include articles for use in liquid conveying systems (e.g., for use in conveying potable water) such as connectors (e.g., threaded or flanged connectors), elbows, flow splitters (e.g., T-fittings, etc.), backflow preventers, pipe end caps, and the like.

The powder coating composition preferably includes at least a film-forming amount of the polymer of the present disclosure, which in preferred embodiments is a polyether polymer having segments of Formula (I). In order to facilitate stability of the powder coating composition during storage prior to use, a polymer of the present disclosure is preferably selected that has a Tg of at least 40°C, more preferably at least 50°C, and even more preferably at least 60°C. The powder coating composition preferably includes at least 50 wt-%, more preferably at least 70 wt-%, and even more preferably at least 90 wt-% of the polymer of the present disclosure, based on total resin solids.

Powder coating compositions typically utilize binder polymers having a different molecular weight (typically a lower molecular weight) than those of liquid packaging coating compositions for use on metal food or beverage cans. When used in powder coating compositions, the polymer of the present disclosure preferably has a number average molecular weight (Mn) of at least 1,000, more preferably at least 1,200, and even more preferably at least 1,500. In such applications, the polymer of the present disclosure preferably has an Mn of less than 6,000, more preferably less than 5,000, and even more preferably less than 4,000.

The powder coating composition preferably includes at least one base powder that includes the polymer of the present disclosure. The base powder may further include one or more optional ingredients, which may include any suitable ingredients disclosed herein. The base powder preferably includes the polymer of the present disclosure as a major component on a weight basis, and more preferably includes at least 50 wt-% of the polymer. In some embodiments, the polymer of the present disclosure comprises all or substantially all of the base powder.

The particles of the base powder may be of any suitable size. Preferably, the particles of the base powder exhibit a particle size diameter of from 1 micron to 200 microns, more preferably from 10 to 150 microns.

The base powder may exhibit any suitable distribution of particle sizes. In some embodiments, the median particle size of the base powder is preferably at least 20 microns, more preferably at least 30 microns, and even more preferably at least 40 microns. In some embodiments, the median particle size is preferably less than 150 microns, more preferably less than 100 microns, and even more preferably less than 60 microns. The median particle sizes referenced in this paragraph are median diameter particle sizes expressed on a volume basis, which may be determined, for example, via laser diffraction.

Powder compositions of the present disclosure may also contain one or more other optional ingredients. The optional ingredients preferably do not adversely affect the powder compositions or articles formed therefrom. Such optional ingredients may be included, for example, to enhance aesthetics; to facilitate manufacturing, processing, and/or handling of powder compositions or articles formed therefrom; and/or to further improve a particular property of powder compositions or articles formed therefrom. Each optional ingredient is preferably included in a sufficient amount to serve its intended purpose, but not in such an amount to adversely affect a powder composition or a cured coating resulting therefrom. The one or more optional ingredients may be present in a same or different particle than the polymer of the present disclosure, or a combination thereof. In preferred embodiments, one or more optional ingredients are present in the particles of the base powder along with the polymer of the present disclosure. If present in particles other than those of the base powder, the particles of the optional ingredient(s) preferably have a particle size in the general range of the particles sizes of the base powder.

The powder composition preferably includes one or more optional curing agents (e.g., crosslinkers). Suitable curing agents may include phenolic crosslinkers, preferably BPA-free phenolic crosslinkers; dicyandiamide, which may be optionally substituted; carboxyl-functional compounds such as, e.g., carboxyl-functional polyester resins or carboxyl-functional acrylic resins; and combinations thereof. The powder composition may include any suitable amount of the one or more crosslinkers. In some embodiments, crosslinker is present in the powder composition in an amount of up to 15 wt-%, preferably up to 10 wt-%, and more preferably up to 5 wt-%, based on the total weight of the powder coating composition. If used, crosslinker is preferably present in an amount of at least 0.1 wt-%, more preferably at least 0.5 wt-%, and even more preferably at least 1 wt-%, based on the total weight of the powder coating composition.

An optional cure accelerator may be present in the powder coating composition to facilitate cure. When used, the powder coating composition typically includes from 0.1 wt-% to 3 wt-% of one or more cure accelerators. 2-methylimidazole is an example of a preferred cure accelerator. Other suitable cure accelerators may include imidazoles, phosphonium salts, tertiary amines, quaternary ammonium salts, anhydrides, polyamides, aliphatic amines, epoxy resin-amine adducts, and combinations thereof.

The powder coating composition may optionally include one or more flow control agents to improve the flow, wetting, and/or leveling properties of the cured film. If used, flow control agents are typically present in an amount of 0.01 wt-% to 5 wt-%, more typically from 0.2 wt-% to 2 wt-%, based on the total weight of the powder coating composition. Examples of suitable flow control agents include polyacrylates such as poly(2-ethylhexyl acrylate) and various co-polymers of 2-ethylhexyl acrylate.

The powder coating composition may optionally include one or more fluidizing agents to facilitate the preparation of a free-flowing powder composition. If used, fluidizing agent is typically present in an amount of 0.01 wt-% to 5 wt-%, more typically from 0.05 wt-% to 0.5 wt-%, based on the total weight of the powder coating composition. Suitable fluidizing agents include, for example, fumed silicas of a suitable particle size. Such fluidizing agents may preferably be added after the melt blending process, such as to the extruded flake before or after grinding.

Inorganic filler and/or colored pigment may optionally be included in the powder coating compositions. Examples of suitable such materials may include calcium silicates such as, e.g., wollastonite; barium sulfate; calcium carbonate; mica; talc; silica; iron oxide; titanium dioxide; carbon black; phthalocyanines; chromium oxide; and combinations thereof.

The powder coating compositions can be prepared via any suitable methods. In one embodiment, some or all of the ingredients are melt-blended together, which may be accomplished, for example, using conventional single-screw or twin-screw extruders. The temperature of the melt-blending step is preferably controlled to avoid any appreciable cross-linking. Typically, a melt-blending temperature is selected such that the temperature of the molten blend does not exceed 100°C to 150°C. The ingredients may optionally be pre-mixed prior to melt blending. After melt blending and cooling, the resulting blend, which is typically an extrudate, can be processed into powder using conventional milling techniques. The resulting milled powder can optionally be sieved to remove particles falling outside the desired particle size range. The powder can optionally be mixed with one or more additional powders to form the finished powder coating composition. For example, in some embodiments, the milled powder is combined with fluidizing agent powder either before or after optional sieving.

The powder coatings compositions can be applied to substrate using any suitable method. Typically, the substrate is a metal substrate (e.g., cast iron, steel, etc.), which may be bare metal or may be optionally pretreated and/or primed. One suitable such method is the electrostatic spray application of charged powder to substrate. Alternatively, the substrate may be applied, for example, by dipping the substrate in a fluidized powder bed. In a preferred embodiment, the powder is applied to heated substrate that has been heated to between 190°C and 240°C. Upon contacting the heated metal substrate, the powder melts, reacts, and forms a continuous coating that is preferably smooth and uniform. In another embodiment, the powder is applied to a near ambient temperature substrate and the powder coated substrate is then heated to a temperature sufficient to cause the powder to melt, react, and form a continuous coating that is preferably smooth and uniform.

The melting and curing (e.g., crosslinking) of the powder composition may be performed in combined or discrete heating steps. In presently preferred embodiments, a combined heating step is used in which the powder coating composition is heated to a temperature sufficient to both melt the powder and cure the resulting continuous coating. The bake temperature and the duration of the bake will vary depending upon a variety of factors, including, for example, the end use. For purposes of curing the coating, the bake temperature is typically at least 150°C, and more typically at least 200°C. In general, a lower cure temperature may be used if a longer cure time is employed. The cure temperature typically will not exceed 240°C. The cure time may range, for example, from 30 seconds to 30 minutes, depending upon the cure temperature and the end use.

The thickness of the cured powder coating will vary depending upon the particular end use. However, typically the cured powder coating will have an average coating thickness in the range of 25 to 1,500 microns, and more typically 50 to 500 microns. In some embodiments, an average coating thickness in the range of 125 to 300 microns is used.

### TEST METHODS

Unless indicated otherwise, the following test methods were utilized in the Examples that follow.

### Differential Scanning Calorimetry

Samples for differential scanning calorimetry ("DSC") testing were prepared by first applying the liquid resin composition onto aluminum sheet panels. The panels were then baked in a Fisher Isotemp electric oven for 20 minutes at 300°F (149°C) to remove volatile materials. After cooling to room temperature, the samples were scraped from the panels, weighed into standard sample pans and analyzed using the standard DSC heat-cool-heat method. The samples were equilibrated at -60°C, then heated at 20°C per minute to 200°C, cooled to -60°C, and then heated again at 20°C per minute to 200°C. Glass transition temperatures were calculated from the thermogram of the last heat cycle. The glass transition was measured at the inflection point of the transition.

### Adhesion

Adhesion testing is performed to assess whether the coating adheres to the coated substrate. The adhesion test was performed according to ASTM D 3359 - Test Method B, using SCOTCH 610 tape, available from 3M Company of Saint Paul, Minnesota. Adhesion is generally rated on a scale of 0-10 where a rating of "10" indicates no adhesion failure, a rating of "9" indicates 90% of the coating remains adhered, a rating of "8" indicates 80% of the coating remains adhered, and so on. Adhesion ratings of 10 are typically desired for commercially viable coatings.

### Blush Resistance

Blush resistance measures the ability of a coating to resist attack by various solutions. Typically, blush is measured by the amount of water absorbed into a coated film. When the film absorbs water, it generally becomes cloudy or looks white. Blush is generally measured visually using a scale of 0-10 where a rating of "10" indicates no blush and a rating of "0" indicates complete whitening of the film. Blush ratings of at least 7 are typically desired for commercially viable coatings and optimally 9 or above.

### Crazing - Reverse Impact Resistance

The reverse impact measures the coated substrate's ability to withstand the deformation encountered when impacted by a steel punch with a hemispherical head and can be a predicator, e.g., for the ability of a food or beverage can coating to survive a drop can event. For the present evaluation, coated substrate was subjected to 36 inch-pounds (4.07 N m) of force using BYK-Gardner "overall" Bend and Impact Tester and rated visually for micro-cracking or micro-fracturing - commonly referred to as crazing. Test pieces were impacted on the uncoated or reverse side. A rating of 10 indicates no craze and suggests sufficient flexibility and cure. A rating of 0 indicates complete failure. Commercially viable coatings preferably show slight or no crazing on a reverse impact test. In the data reported below in Table 1, "w" refers to portions of the coated strip immersed in water and "wv" refers to portions of the coated strip that were exposed to water vapor in the headspace.

### Process Resistance

The process test determines the ability of a coating to withstand elevated temperatures and pressures while in contact with water. Such conditions are frequently present in pasteurization processes used in conjunction with food or beverage products. A coated substrate is typically tested as follows. Strips of coated metal substrate (e.g., 1.5 inch by 7 inch electroplated tin, "ETP" strips) are partially immersed in deionized water, and the partially immersed strips are placed in a pressure cooker and subjected to 90 minutes at elevated pressure suitable to achieve a temperature of 250°F (∼121°C). The coated strips where then tested for coating adhesion and blush as described above. Commercially viable coatings preferably provide adequate process resistance with perfect adhesion (rating of 10) and blush ratings of at least 5, optimally at least 9.

### Solvent Resistance

The extent of "cure" or crosslinking of a coating is measured as a resistance to solvents, such as methyl ethyl ketone (MEK) or isopropyl alcohol (IPA). This test is performed as described in ASTM D 5402 - 93. The number of double-rubs (i.e., one back-and-forth motion) is reported. Preferably, the MEK solvent resistance is at least 30 double rubs.

In the following, the disclosure of the present application is summarized:
1. An article comprising:
   a packaging container, or a portion thereof, having a metal substrate and a coating composition disposed on at least a portion of the substrate, wherein the coating composition includes a polyether polymer that is substantially free of bound bisphenol A, bisphenol F, bisphenol S, and epoxides thereof and is a reaction product of ingredients including:
   (i) a diepoxide including a segment of the below Formula (II) 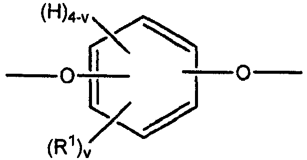 wherein:
      H denotes a hydrogen atom, if present,
      each R¹, if present, is independently an atom or group having an atomic weight of at least 15 Daltons,
      v is 0 to 4, and
      wherein two or more R¹ groups can join to form one or more cyclic groups; and
   (ii) a polyhydric monophenol.
2. An article comprising:
   a packaging container, or a portion thereof, having:
   a metal substrate;
   a coating composition disposed on at least a portion of the substrate, the coating composition comprising:
      a polyether polymer that includes at least 25% by weight of aryl or heteroaryl groups and is substantially free of bound bisphenol monomer, or a diepoxide thereof, and includes one or more segments of the below Formula (II): 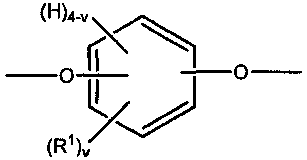 wherein:
      H denotes a hydrogen atom, if present,
      each R¹, if present, is independently an atom or group having an atomic weight of at least 15 Daltons,
      v is 0 to 4, and
      wherein two or more R¹ groups can join to form one or more cyclic groups.
3. The article of any preceding item, wherein the packaging container, or a portion thereof, is a food or beverage container or a portion thereof having the coating composition disposed on at least a portion of an inside surface.
4. The article of any preceding item, wherein each of the depicted oxygen atoms in Formula (II) is present in an ether linkage.
5. The article of any preceding item, wherein the polymer includes one or more of - CH₂-CH(OH)-CH₂- or -CH₂-CH₂- CH(OH)- segments.
6. The article of any preceding item, wherein v is 1 to 4.
7. The article of any preceding item, wherein v is 2 to 4.
8. The article of any preceding item, wherein at least one R¹ is attached to the phenylene ring at an ortho position relative to at least one of the depicted oxygen atoms.
9. The article of any preceding item, wherein each depicted oxygen atom in Formula (II) has at least one R¹ positioned ortho to it on the phenylene ring.
10. The article of any preceding item, wherein each R¹ is independently selected from an organic group, a sulfur-containing group, or a nitrogen-containing group.
11. The article of any preceding item, wherein each R¹ is an organic group.
12. The article of item 11, wherein each R¹ is a hydrocarbon moiety that includes from one to four carbon atoms.
13. The article of any preceding item, wherein the polyether polymer is a reaction product of reactants including a diepoxide and a dihydric monophenol.
14. The article of item 13, wherein each of the diepoxide and the dihydric monophenol include a segment of Formula (II).
15. The article of any preceding item, wherein the polyether polymer is a reaction product of reactants including a first dihydric monophenol and a diepoxide of a second dihydric monophenol, and wherein the first and second dihydric monophenols are the same or different.
16. The article of item 15, wherein the diepoxide is a diglycidyl ether of the second dihydric monophenol.
17. The article of any of items 1 or 13 to 16, wherein the diepoxide is non-genotoxic.
18. The article of any of items 1 or 13 to 17, wherein the diepoxide is a compound of the below Formula (IV): 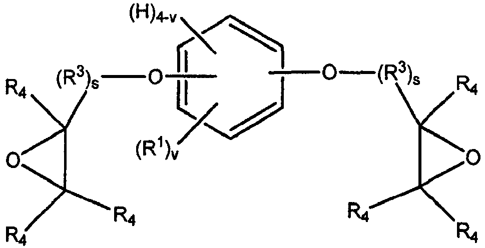 wherein:
   H and R¹ are as described in Formula (II);
   v is 1 to 4;
   s is 0 to 1;
   R³, if present, is a divalent group; and
   each R⁴ is independently a hydrogen atom, a halogen atom, or an organic group that may include one or more heteroatoms.
19. The article of any of items 15 to 18, wherein the first dihydric monophenol is selected from one or more of catechol, resorcinol, or hydroquinone.
20. The article of any preceding item, wherein the segment of Formula (II) is derived from a diepoxide of 2,5-di-t-butylhydroquinone.
21. The article of any preceding item, wherein the polyether polymer exhibits a glass transition temperature of at least 60°C.
22. The article of any preceding item, wherein phenylene groups constitute at least 25 weight percent of the polyether polymer.
23. The article of any preceding item, wherein phenylene groups constitute at least 45 weight percent of the polyether polymer.
24. The article of any preceding item, wherein the polyether polymer has a polydispersity index of from 2 to 3.5 prior to any cure of the coating composition.
25. The article of any preceding item, wherein the polyether polymer does not include any halogens.
26. The article of any preceding item, wherein the polyether polymer has a number average molecular weight of at least 2,000 and a glass transition temperature of at least 30°C, and wherein the coating composition includes at least 10 weight percent of the polyether polymer, based on total resin solids in the coating composition.
27. The article of any preceding item, wherein a backbone of the polyether polymer is free of ester linkages.
28. The article of any preceding item, wherein the coating composition is substantially free of mobile or bound bisphenol A, bisphenol F, bisphenol S, and diepoxides thereof.
29. The article of any preceding item, wherein the coating composition is substantially free of any mobile or bound bisphenol monomers and diepoxides thereof.
30. The article of any preceding item, wherein the article is a food or beverage packaging article including a food or beverage product packaged therein.
31. The coating composition of any preceding item.
32. A method comprising,
   providing a coating composition of any previous item, and
   applying the coating composition to at least a portion of a metal substrate prior to or after forming the metal substrate into a food or beverage container or a portion thereof.
33. The method of item 32, wherein the coating composition is applied to at least a portion of an interior surface of a preformed food or beverage container, or a portion thereof.
34. A powder coating composition comprising a base powder including the polyether polymer of any preceding item.
35. The powder coating composition of item 34, wherein the powder coating composition is substantially free of any mobile or bound bisphenol monomers and diepoxides thereof.
36. A method, comprising:
   providing a metal substrate;
   applying the powder coating composition of item 34 or 35 to the metal substrate;
   heating the metal substrate prior to, during, or after application of the powder coating composition to form a cured coating from the powder coating composition.
37. The method of item 36, wherein the metal substrate is included in an article for storing or conveying liquid.
38. The method of item 37, wherein the cured coating is located on a surface intended for contacting potable water.
39. The article resulting from any of items 36 to 38.
40. The article of item 39, wherein the article is a water valve or fitting.

### EXAMPLES

The following examples are offered to aid in understanding of the present invention and are not to be construed as limiting the scope thereof. Unless otherwise indicated, all parts and percentages are by weight.

### Example 1: Synthesis of the diglvcidvl ether of 2,5-di-t-butyl hydroquinone and a Polyether Polymer Therefrom

2,5-di-tert-butylhydroquinone (30 g, 0.135 mol) was dissolved in 2-propanol (500 mL) and epichlorohydrin (100 g, 1.08 mol) at room temperature. Sodium hydroxide (16.2 g, 0.405 mol) in water (63 mL) was added in portions over 5-10 minutes. After stirring for 30 minutes the purple solution was heated to 70°C. The mixture stirred overnight at 70°C. After 20 hours, the solution was cooled to room temperature and filtered. The 2-propanol was removed on a rotary evaporator at 30°C. The remaining mixture was diluted with water (400 mL) and extracted with ethyl acetate (1 L). The organic extract was dried over sodium sulfate. After filtration and concentration under reduced pressure, the remaining oil was dried under high vacuum at ambient temperature until a constant weight was obtained. The crude product (48.4 g, orange solid) was stirred with hot methanol (200 mL) for 30 minutes. The methanol was allowed to cool to room temperature, while stirring. The solid product was filtered and suspended again in hot methanol (150 mL). After cooling and filtering, the semi-purified product (30.1 g, 90-95% purity by NMR) was crystallized from hot ethyl acetate (50 mL). The ethyl acetate was cooled to room temperature and then refrigerated for 4 hours at -10°C. The crystallized product was filtered and dried under high vacuum at ambient temperature until a constant weight was obtained. The experiment generated the diglycidyl ether of 2,5-di-tert-butylhydroquinone (19.4 g, 43% yield) as a white solid. The epoxy value was 0.577 equivalents per 100 grams of material.

To a 4-neck round-bottom flask equipped with a mechanical stirrer, a nitrogen inlet to maintain a nitrogen blanket, a water-cooled condenser, and a thermocouple connected to heating control device and a heating mantle was added 15.34 parts of the diglycidyl ether of 2,5-di-tert-butyl hydroquinone, 4.54 parts of hydroquinone, 0.018 part CATALYST 1201, and 1.05 parts ethyl carbitol. This mixture was heated with stirring to 125°C, allowed to exotherm to 169°C, then heated at 160°C for 3 hours until the epoxy value was 0.034 equivalents per 100 grams. At this point to the mixture was added 18.8 parts cyclohexanone, while the mixture was cooled to 70°C. The batch was discharged affording a solvent-based polymer with a nonvolatile content ("NVC") of 50% and an epoxy value of 0.034 equivalents per 100 grams of polymer. The polymer had an Mn of 6,520, a PDI of 2.47, and exhibited a Tg of 74°C.

### Example 2: Coating Compositions

A packaging coating composition, and more specifically a packaging coating composition suitable for use on the interior or exterior of a food or beverage can, may be formulated pursuant to the methods and materials included herein using the polyether polymer. Table 1 below shows the film properties of the resin, when formulated with a non-BPA, cresol-based, thermosetting resole phenolic, with and without catalyst. The coating compositions of each of Runs 1-3 were applied to 0.25 75# ETP substrate and cured for 10 minutes in a 400°F (∼204°C) box oven to yield a cured coating having the indicated dry film weight.

**Table 1**

| Ingredients | Run 1 Wt% | Run 2 Wt% | Run 3 Wt% |
|---|---|---|---|
| Resin of Example 1 (35.0% solids) | 100.00 | 73.02 | 70.80 |
| Resole Phenolic (80.0% solids) | -- | 11.32 | 10.97 |
| Cyclohexanone | -- | 15.06 | 14.60 |
| BYK-310* | -- | 0.60 | 0.58 |
| Phosphoric acid catalyst (10% in Butyl Cellosolve) | -- | -- | 3.05 |
| Total: | 100.00 | 100.00 | 100.00 |
| NVC | 35.0% | 34.6% | 33.9% |
| Resin: Crosslinker (solids on solids) | 100: 0 | 74: 26 | 74: 26 |
| Dry Film Weight (microns) | 4.9 | 4.3 | 4.5 |
| Adhesion | 10 | 10 | 10 |
| Solvent Resistance (Double Rubs) | <3 | 35 | 90- 100 |
| Rev. Imp. Crazing (36 in-lbs) | Severe | Moderate ("7") | None ("10") |
| Process Resistance (90 minutes at 250°F): | | | |
| Blush (W/WV) | -- | 8/10 | 10/10 |
| Adhesion (W/WV) | -- | 10/10 | 10/10 |

| | | | |
|---|---|---|---|
| *BYK-310 is a siloxane flow modifier. | | | |

It can be seen from Table 1 that, when the resin is formulated with crosslinker and catalyst, excellent cure and film properties are obtained.

The foregoing detailed description and examples have been given for clarity of understanding only. No unnecessary limitations are to be understood therefrom. The invention is not limited to the exact details shown and described, for variations obvious to one skilled in the art will be included within the invention defined by the claims. The invention illustratively disclosed herein suitably may be practiced, in some embodiments, in the absence of any element which is not specifically disclosed herein.

## Claims

1. An article comprising:
a food or beverage packaging container, or a portion thereof, having a metal substrate and a coating composition disposed on at least a portion of the substrate, wherein the coating composition includes a polyether polymer that is substantially free of bound bisphenol A, bisphenol F, bisphenol S, and epoxides thereof and is a reaction product of ingredients including:
(i) a diepoxide including a segment of the below Formula (II) 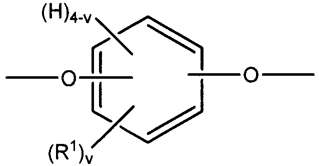 wherein:
H denotes a hydrogen atom, if present,
each R¹, if present, is independently an atom or group having an atomic weight of at least 15 Daltons,
v is 1 to 4, and
wherein two or more R¹ groups can join to form one or more cyclic groups, and
each depicted oxygen atom in Formula (II) has at least one R¹ positioned ortho to it on the phenylene ring; and
(ii) a polyhydric monophenol.

2. An article comprising:
a food or beverage packaging container, or a portion thereof, having:
a metal substrate;
a coating composition disposed on at least a portion of the substrate, the coating composition comprising:
a polyether polymer that includes at least 25% by weight of aryl or heteroaryl groups and is substantially free of bound bisphenol monomer, or a diepoxide thereof, and includes one or more segments of the below Formula (II): 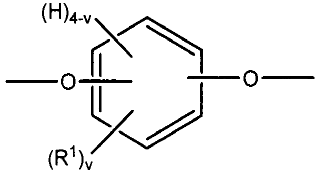 wherein:
H denotes a hydrogen atom, if present,
each R¹, if present, is independently an atom or group having an atomic weight of at least 15 Daltons,
v is 1 to 4, and
wherein two or more R¹ groups can join to form one or more cyclic groups, and
each depicted oxygen atom in Formula (II) has at least one R¹ positioned ortho to it on the phenylene ring.

3. The article of any preceding claim, wherein the packaging container, or a portion thereof, is a food or beverage container or a portion thereof having the coating composition disposed on at least a portion of an inside surface.

4. The article of any preceding claim, wherein each of the depicted oxygen atoms in Formula (II) is present in an ether linkage and wherein the polymer includes one or more of -CH₂-CH(OH)-CH₂- or -CH₂-CH₂- CH(OH)- segments.

5. The article of any preceding claim, wherein v is 2 to 4.

6. The article of any preceding claim, wherein each R¹ is independently selected from an organic group, a sulfur-containing group, or a nitrogen-containing group.

7. The article of claim 6, wherein the organic group in each R¹ is a hydrocarbon moiety that includes from one to four carbon atoms.

8. The article of any preceding claim, wherein the polyether polymer is a reaction product of reactants including a diepoxide and a dihydric monophenol.

9. The article of claim 8, wherein each of the diepoxide and the dihydric monophenol include a segment of Formula (II), with the proviso that for the dihydric monophenol v is 0 to 4.

10. The article of any of claims 1 or 8 or 9, wherein the diepoxide is non-genotoxic.

11. The article of any preceding claim, wherein the segment of Formula (II) is derived from a diepoxide of 2,5-di-t-butylhydroquinone.

12. The article of any preceding claim, wherein the polyether polymer exhibits a glass transition temperature of at least 60°C as determined by DSC in accordance with the description and wherein phenylene groups constitute at least 25 weight percent of the polyether polymer.

13. The article of any preceding claim, wherein the polyether polymer has a number average molecular weight of at least 2,000 and a glass transition temperature of at least 30°C as determined by DSC in accordance with the description, and wherein the coating composition includes at least 10 weight percent of the polyether polymer, based on total resin solids in the coating composition.

14. The article of any preceding claim, wherein a backbone of the polyether polymer is free of ester linkages.

15. The article of any preceding claim, wherein the coating composition is substantially free of any mobile or bound bisphenol monomers and diepoxides thereof and wherein the polyether polymer does not include any halogens.

16. The article of any preceding claim, wherein the article is a food or beverage packaging article including a food or beverage product packaged therein.

17. The coating composition of any preceding claim.

18. A method comprising,
providing a coating composition of any previous claim, and
applying the coating composition to at least a portion of a metal substrate prior to or after forming the metal substrate into a food or beverage container or a portion thereof.

## Patentansprüche

1. Ein Gegenstand, umfassend: einen Lebensmittel- oder Getränkeverpackungsbehälter oder einen Teil davon mit einem Metallsubstrat und einer Beschichtungszusammensetzung, die auf mindestens einem Teil des Substrats angeordnet ist, wobei die Beschichtungszusammensetzung ein Polyetherpolymer beinhaltet, das im Wesentlichen frei ist von gebundenem Bisphenol A, Bisphenol F, Bisphenol S und Epoxiden davon und das ein Reaktionsprodukt aus Inhaltsstoffen ist, einschließlich:
(i) ein Diepoxid, das ein Segment der nachstehenden Formel (II) beinhaltet 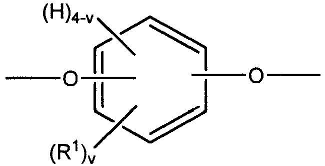 wobei:
H ein Wasserstoffatom bezeichnet, falls vorhanden,
jedes R¹, falls vorhanden, unabhängig ein Atom oder eine Gruppe mit einem Atomgewicht von mindestens 15 Dalton ist,
v 1 bis 4 ist und
wobei zwei oder mehr R¹ Gruppen verbunden sein können, um eine oder mehrere cyclische Gruppen zu bilden und
jedes dargestellte Sauerstoffatom in Formel (II) mindestens ein R¹ aufweist, das ortho zu diesem auf dem Phenylenring positioniert ist; und
(ii) ein mehrwertiges Monophenol.

2. Ein Gegenstand, umfassend:
einen Lebensmittel- oder Getränkeverpackungsbehälter oder einen Teil davon mit: einem Metallsubstrat;
eine Beschichtungszusammensetzung, die auf mindestens einem Teil des Substrats angeordnet ist, wobei die Beschichtungszusammensetzung umfasst:
ein Polyetherpolymer, welches mindestens 25 Gew.-% Aryl- oder Heteroarylgruppen beinhaltet und im Wesentlichen frei ist von gebundenem Bisphenol-Monomer oder einem Diepoxid davon und ein oder mehrere Segmente der nachstehenden Formel (II) beinhaltet: 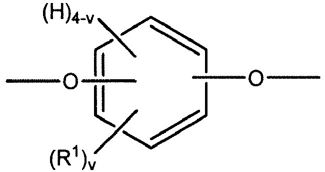 wobei:
H ein Wasserstoffatom bezeichnet, falls vorhanden,
jedes R¹, falls vorhanden, unabhängig ein Atom oder eine Gruppe mit einem Atomgewicht von mindestens 15 Dalton ist,
v 1 bis 4 ist und
wobei zwei oder mehr R¹ Gruppen verbunden sein können, um eine oder mehrere cyclische Gruppen zu bilden und
jedes dargestellte Sauerstoffatom in Formel (II) mindestens ein R¹ aufweist, das ortho zu diesem auf dem Phenylenring positioniert ist.

3. Der Gegenstand gemäß einem der vorangegangenen Ansprüche, wobei der Verpackungsbehälter oder ein Teil davon ein Lebensmittel- oder Getränkebehälter oder ein Teil davon mit einer Beschichtungszusammensetzung ist, die auf mindestens einem Teil einer inneren Oberfläche angeordnet ist.

4. Der Gegenstand gemäß einem der vorangegangenen Ansprüche, wobei jedes der dargestellten Sauerstoffatome in Formel (II) in einer Etherbindung vorhanden ist und wobei das Polymer eines oder mehrere -CH₂-CH(OH)-CH₂- oder -CH₂-CH₂-CH(OH)- Segmente beinhaltet.

5. Der Gegenstand gemäß einem der vorangegangenen Ansprüche, wobei v 2 bis 4 ist.

6. Der Gegenstand gemäß einem der vorangegangen Ansprüche, wobei jedes R¹ unabhängig aus einer organischen Gruppe, einer schwefelhaltigen Gruppe oder einer stickstoffhaltigen Gruppe ausgewählt ist.

7. Der Gegenstand gemäß Anspruch 6, wobei die organische Gruppe in jedem R¹ eine Kohlenwasserstoffeinheit ist, die ein bis vier Kohlenstoffe beinhaltet.

8. Der Gegenstand gemäß einem der vorangegangenen Ansprüche, wobei das Polyetherpolymer ein Reaktionsprodukt aus Reaktionspartnern ist, einschließlich eines Diepoxids und eines zweiwertigen Monophenols.

9. Der Gegenstand gemäß Anspruch 8, wobei sowohl das Diepoxid als auch das zweiwertige Monophenol ein Segment der Formel (II) beinhalten, mit der Maßgabe, dass für das zweiwertige Monophenol v 0 bis 4 ist.

10. Der Gegenstand gemäß einem der Ansprüche 1 oder 8 oder 9, wobei das Diepoxid nicht genotoxisch ist.

11. Der Gegenstand gemäß einem der vorangegangenen Ansprüche, wobei das Segment der Formel (II) von einem Diepoxid von 2,5-Di-t-Butylhydrochinon abgeleitet ist.

12. Der Gegenstand gemäß einem der vorangegangenen Ansprüche, wobei das Polyetherpolymer eine Glasübergangstemperatur von mindestens 60°C, bestimmt mittels DSC gemäß der Beschreibung, aufweist, und wobei Phenylengruppen mindestens 25 Gew.-% des Polyetherpolymers darstellen.

13. Der Gegenstand gemäß einem der vorangegangenen Ansprüche, wobei das Polyetherpolymer ein Zahlenmittel des Molekulargewichts von mindestens 2.000 und eine Glasübergangstemperatur von mindestens 30°C, bestimmt mittels DSC gemäß der Beschreibung, aufweist, und wobei die Beschichtungszusammensetzung mindestens 10 Gew.-% des Polyetherpolymers, bezogen auf die gesamten Harzfeststoffe in der Beschichtungszusammensetzung, beinhaltet.

14. Der Gegenstand gemäß einem der vorangegangenen Ansprüche, wobei ein Gerüst des Polyetherpolymers frei von Esterbindungen ist.

15. Der Gegenstand gemäß einem der vorangegangenen Ansprüche, wobei die Beschichtungszusammensetzung im Wesentlichen frei ist von mobilen oder gebundenen Bisphenolmonomeren und Diepoxiden davon und wobei das Polyetherpolymer keine Halogene enthält.

16. Der Gegenstand gemäß einem der vorangegangenen Ansprüche, wobei der Gegenstand ein Lebensmittel- oder Getränkeverpackungsgegenstand ist, der ein darin verpacktes Lebensmittel- oder Getränkeprodukt beinhaltet.

17. Die Beschichtungszusammensetzung gemäß einem der vorangegangenen Ansprüche.

18. Ein Verfahren, umfassend
Bereitstellen einer Beschichtungszusammensetzung gemäß einem der vorangegangenen Ansprüche und
Aufbringen der Beschichtungszusammensetzung auf mindestens einen Teil eines Metallsubstrats vor oder nach Formen des Metallsubstrats zu einem Lebensmittel- oder Getränkebehälter oder einem Teil davon.

## Revendications

1. Article comprenant :
un récipient de conditionnement pour aliment ou boisson, ou une partie de celui-ci, ayant un substrat métallique et une composition de revêtement disposée sur au moins une partie du substrat,
dans lequel la composition de revêtement comprend un polymère de type polyéther qui est pratiquement exempt de bisphénol A, de bisphénol F, de bisphénol S et de leurs époxydes, liés, et qui est un produit de la réaction d'ingrédients comprenant :
(i) un diépoxyde comprenant un segment de formule (II) ci-dessous 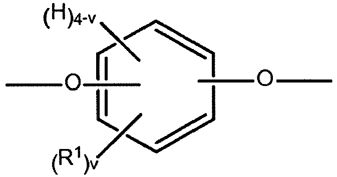 dans laquelle :
H représente un atome d'hydrogène, s'il est présent,
chaque R¹, s'il est présent, est indépendamment un atome ou groupe ayant un poids atomique d'au moins 15 Daltons,
v vaut de 1 à 4, et
deux ou plus groupes R¹ peuvent se joindre pour former un ou plusieurs groupes cycliques, et
chaque atome d'oxygène indiqué dans la formule (II) a au moins un R¹ positionné en ortho par rapport à lui sur le cycle phénylène ; et
(ii) un monophénol polyhydrique.

2. Article comprenant :
un récipient de conditionnement pour aliment ou boisson, ou une partie de celui-ci, ayant :
un substrat métallique ;
une composition de revêtement disposée sur au moins une partie du substrat, la composition de revêtement comprenant :
un polymère de type polyéther qui contient au moins 25 % en poids de groupes aryle ou hétéroaryle et qui est pratiquement exempt de monomère de bisphénol lié, ou d'un diépoxyde de celui-ci, et qui comprend un ou plusieurs segments de formule (II) ci-dessous : 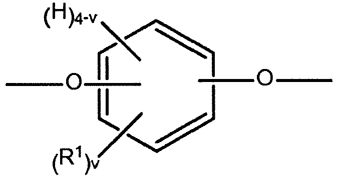
dans laquelle :
H représente un atome d'hydrogène, s'il est présent,
chaque R¹, s'il est présent, est indépendamment un atome ou groupe ayant un poids atomique d'au moins 15 Daltons,
v vaut de 1 à 4, et
deux ou plus groupes R¹ peuvent se joindre pour former un ou plusieurs groupes cycliques, et
chaque atome d'oxygène indiqué dans la formule (II) a au moins un R¹ positionné en ortho par rapport à lui sur le cycle phénylène.

3. Article selon l'une quelconque des revendications précédentes, dans lequel le récipient de conditionnement, ou une partie de celui-ci, est un récipient pour aliment ou boisson ou une partie de celui-ci ayant la composition de revêtement disposée sur au moins une partie d'une surface intérieure.

4. Article selon l'une quelconque des revendications précédentes, dans lequel chacun des atomes d'oxygène indiqués dans la formule (II) est présent dans une liaison éther et dans lequel le polymère comprend un ou plusieurs segments -CH₂-CH(OH)-CH₂- ou -CH₂-CH₂-CH(OH)-.

5. Article selon l'une quelconque des revendications précédentes, dans lequel v vaut de 2 à 4.

6. Article selon l'une quelconque des revendications précédentes, dans lequel chaque R¹ est indépendamment choisi parmi un groupe organique, un groupe soufré, et un groupe azoté.

7. Article selon la revendication 6, dans lequel le groupe organique dans chaque R¹ est un fragment hydrocarboné qui contient un à quatre atomes de carbone.

8. Article selon l'une quelconque des revendications précédentes, dans lequel le polymère de type polyéther est un produit de la réaction de réactifs comprenant un diépoxyde et un monophénol dihydrique.

9. Article selon la revendication 8, dans lequel chacun parmi le diépoxyde et le monophénol dihydrique comprend un segment de formule (II), sous réserve que, pour le monophénol dihydrique, v vaille de 0 à 4.

10. Article selon l'une quelconque des revendications 1 ou 8 ou 9, dans lequel le diépoxyde n'est pas génotoxique.

11. Article selon l'une quelconque des revendications précédentes, dans lequel le segment de formule (II) dérive d'un diépoxyde de 2,5-di-t-butylhydroquinone.

12. Article selon l'une quelconque des revendications précédentes, dans lequel le polymère de type polyéther présente une température de transition vitreuse d'au moins 60°C, telle que déterminée par DSC conformément à la description, et dans lequel les groupes phénylène représentent au moins 25 % en poids du polymère de type polyéther.

13. Article selon l'une quelconque des revendications précédentes, dans lequel le polymère de type polyéther a une masse moléculaire moyenne en nombre d'au moins 2 000 et une température de transition vitreuse d'au moins 30°C, telle que déterminée par DSC conformément à la description, et dans lequel la composition de revêtement comprend au moins 10 % en poids du polymère de type polyéther, par rapport au total des solides de résine dans la composition de revêtement.

14. Article selon l'une quelconque des revendications précédentes, dans lequel une charpente du polymère de type polyéther est exempte de liaisons ester.

15. Article selon l'une quelconque des revendications précédentes, dans lequel la composition de revêtement est pratiquement exempte de quelconques monomères de bisphénol mobiles ou liés et de diépoxydes de ceux-ci et dans lequel le polymère de type polyéther ne contient aucun halogène.

16. Article selon l'une quelconque des revendications précédentes, lequel article est un article de conditionnement pour aliment ou boisson comprenant un produit alimentaire ou une boisson conditionné dans celui-ci.

17. Composition de revêtement de l'une quelconque des revendications précédentes.

18. Méthode comprenant
la fourniture d'une composition de revêtement de l'une quelconque des revendications précédentes, et
l'application de la composition de revêtement sur au moins une partie d'un substrat métallique avant ou après formation du substrat métallique en un récipient pour aliment ou boisson ou une partie de celui-ci.
